# EUROPEAN PATENT APPLICATION

(11) **EP 1 729 296 A1**
(43) Date of publication of application: **06.12.2006**
(21) Application number: 05721484.3
(22) Date of filing: 25.03.2005
(51) Int. Cl.: G11B 17/028, G11B 17/26, G11B 21/02

(54) **RECORDING MEDIUM REPRODUCING DEVICE**

(30) Priority: 25.03.2004 JP 2004089014
(71) Applicant: Pioneer Corporation, Tokyo 153-8654 (JP); Tohoku Pioneer Corp., Tendo-shi, Yamagata 994-8585 (JP)
(72) Inventor: Suzuki, Toru, c/o Pioneer Corporation, Kawagoe-shi, Saitama 3508555 (JP); Shinkai, Yasuhiro, c/o Pioneer Corporation, Kawagoe-shi, Saitama 3508555 (JP); Yoshida, Susumu, c/o Pioneer Corporation, Kawagoe-shi, Saitama 3508555 (JP); Saitou, Kazuhiro, c/o Tohoku Pioneer Corporation, Tendo-shi, Yamagata 9948585 (JP); Muto, Akihiro, c/o Pioneer Corporation, Kawagoe-shi, Saitama 3508555 (JP); Mizoguchi, Takashi, c/o Pioneer Corporation, Kawagoe-shi, Saitama 3508555 (JP); Takahashi, Hideaki, c/o Pioneer Corporation, Kawagoe-shi, Saitama 3508555 (JP); Shimosawa, Ryosuke, c/o Pioneer Corporation, Kawagoe-shi, Saitama 3508555 (JP)
(74) Representative: Grünecker, Kinkeldey, Stockmair & Schwanhäusser Anwaltssozietät
(86) International application number: PCT/JP2005/005557
(87) International publication number: WO 2005/093740

(57) **Abstract**

For providing a recording medium playback apparatus, which can prevent that clamping a recording medium in playback is unlocked, a CD changer includes a movable frame 66, a clamp unit 67, a pick-up unit 69, a lock unit 70 and a clamp lock/unlock unit 71. The movable frame 66 is movable against a main body. The clamp unit 67 is arranged on the movable frame 66 and clamps a CD 2. The pick-up unit 69 can move freely between a unclamp position to move close to the clamp unit 67 so as to unlock clamping of the clamp unit 67 and a playback position apart from the unclamp position more than the clamp unit 67. The lock unit 70 can move freely between a unlock position to make the movable frame 66 movable and a lock position to fix the movable frame 66. The clamp lock/unlock unit 71 in the unlock position limits the pick-up unit 69 to move close to the clamp unit 67 until the unclamp position.

## Description

### Field of the Invention

This invention relates to a recording medium playback apparatus to be installed in a car.

### Background of the Invention

Usually, a recording medium playback apparatus for reading information recorded in a recording medium, such as an optical disk like a compact disk (call CD hereafter), referring Patent Document 1, includes an optical pick-up for reading the information, and a clamp unit for holding and rotating the recording medium. The clamp unit has a turntable for rotating the recording medium, and a clamp mechanism for holding the recording medium on the turntable. The recording medium playback apparatus to be installed in the car is required to be miniaturized and lightened.

A recording medium playback apparatus having a movable member, an extract/retract member provided between the turntable and the movable member, and a hook as the aforesaid clamp mechanism is know. The turntable is provided with a flat mount surface for mounting the recording medium thereon. The movable member is arranged at an opposite side of the mount surface so as to slide freely along a direction vertical to the mount surface and is biased toward the turntable.

The extract/retract member is formed into an L-shape in side view. The plural extract/retract members are arranged along a circumference of the turntable. When the movable member moves close to the turn table, an end of the extract/retract member is pushed up by the movable member and projects from the mount surface. Thereby, the end of the extract/retract member can hold the recording medium between the mount surface. When the movable member moves apart from the turntable, the end of the extract/retract member retracts under the mount surface by own weight. Thereby, the end of the extract/retract member is disabled from holding the recording member between the mount surface.

The hook is attached on the pick-up unit. When the pick-up unit moves close to the turntable, the hook penetrates a space between the turntable and the movable member, and removes the movable member from the turntable. When the pick-up unit moves apart from the turntable, the hook moves out of the space between the turntable and the movable member, and makes the movable member contact to the opposite surface of the mount surface.

In the aforesaid usual clamp mechanism, the pick-up unit moves close to the turntable, and the hook penetrates the space between the turntable and the movable member. Thereby, the end of the extract/retract member is extracted under the mount surface, so that the recording medium can be mounted on the mount surface. When the recording medium is mounted on the mount surface, the pick-up unit moves apart from the turntable, and the hook moves out of the space between the turntable and the movable member. Thereby, the end of the extract/retract member holds the recording medium between the mount surface. Thus, aforesaid usual clamp mechanism clamps the recording medium.

When the recording medium is dismount from the mount surface, the pick-up unit moves close to the turntable. Thereafter, the hook penetrates into the space between the turntable and the movable member, and the end of the extract/retract member extracts under the mount surface. Thereby, the recording medium can be dismounted from the mount surface. It is referred by Patent document of Japan Patent Published Application No. H10-162463.

### SUMMERY OF INVENTION

### Objects to be solved

In the usual recording medium playback apparatus, the optical pick-up unit irradiates a required recording area of the recording medium by a light for reading (main beam), so that information at the required recording area is read out. The required recording area could not be irradiated with the light of reading (main beam) because of vibration by the car in driving condition. It is considered that, after the pick-up unit is moved once closest to the turntable, the required recording area of the recording medium is irradiated with the light for reading (main beam).

In the usual recording medium playback apparatus, when the pick-up unit is moved once closest to the turntable, the hook penetrates the space between the turntable and the movable member, and the end of the extract/retract member retracts under the mount surface. Thereby, in the usual recording medium playback apparatus, during playing back the recording medium, that is rotating the recording medium by the turntable, it is considered to unclamp the recording medium. In case, the recording medium during playing back, that is in rotating, is dismounted from the turntable, that is the clamp unit.

To overcome the above problem, an object of this invention is to provide a recording medium playback apparatus, which can prevent unclamping the recording medium during playback.

### How to attain the object

In order to attain the objects, a recording medium playback apparatus according to this invention is characterized by including a main body; a clamp unit clamping a recording medium to be received in the main body and rotating the recording medium; a lock unit movable between a lock position, in which the clamp unit is locked to the main body, and a unlock position, in which the clamp unit is made movable against the main body; and a clamp lock/unlock unit limiting to unlock clamping by the clamp unit when the lock unit is positioned in the unlock position, and allowing to unlock clamping by the clamp unit when the lock unit is positioned in the lock position.

### BRIEF DESCRIPTION OF THE DRAWINGS

Fig. 1 is a perspective view of a CD changer as a recording medium playback apparatus of an embodiment according to the present invention;
Fig. 2 is a perspective view showing a fixed chassis, a disk conveying unit, a disk playback unit, a disk receiving unit and a disk positioning mechanism assembled together in the CD changer shown in Fig. 1;
Fig. 3 is a partially exploded perspective view of the fixed chassis, the disk playback unit and the disk receiving unit shown in 2;
Fig. 4 is a perspective view showing holders of the disk receiving unit and a separated-groove expand/shrink mechanism shown in Fig. 2;
Fig. 5 is an expanded perspective view of the separated-groove expand/shrink mechanism shown in Fig. 4;
Fig. 6 is a perspective view of a condition that a second slide member of the separated-groove expand/shrink mechanism shown in Fig. 5 is most apart from a second wall of a member body and a projection of one holder corresponds to a guide groove;
Fig. 7 is a perspective view of a condition that the projection is positioned in a playback position of a guide groove by rotating a movable member of the separated-groove expand/shrink mechanism shown in Fig. 6;
Fig. 8 is a perspective view of a condition that the slide member of the separated-groove expand/shrink mechanism shown in Fig. 5 is most close to the second wall of the member body, and the projection of the one holder corresponds to the guide groove;
Fig. 9 is a perspective view of a condition that the projection is positioned in a loading position of the guide groove by rotating the movable member of the separated-groove expand/shrink mechanism shown in Fig. 8;
Fig. 10 is a developmental view of developing the movable member of the separated-groove expand/shrink mechanism shown in Fig. 5 and the slide member along circumferences of them;
Fig. 11 is a developmental view of a condition that the guide groove of the slide member shown in Fig. 10 corresponds to the projection of the one holder;
Fig. 12 is a developmental view of a condition that the projection is started to be inserted into the guide groove by rotating the movable member from a condition shown in Fig. 11;
Fig. 13 is a developmental view of a condition that the projection is positioned in the loading portion of the guide groove by further rotating the movable member from a condition shown in Fig. 12;
Fig. 14 is a developmental view of a condition that the projection is positioned into a pick-up-inserting portion of the guide groove by further rotating the movable member from a condition shown in Fig. 13;
Fig. 15 is a developmental view of a condition that the projection is positioned in a clamp portion of the guide groove by further rotating the movable member from a condition shown in Fig. 14;
Fig. 16 is a developmental view of a condition that the projection is positioned in a playback portion of the guide groove by further rotating the movable member from a condition shown in Fig. 15;
Fig. 17 is a developmental view of a condition that the projection of the holder second from a bottom side shown in Fig. 16 is positioned in a playback portion of the guide groove;
Fig. 18 is a developmental view of a condition that the projection of the holder second from a top side shown in Fig. 16 is positioned in a playback portion of the guide groove;
Fig. 19 is a developmental view of a condition that the slide member shown in Fig. 10 is moved closest to the second wall of the member body;
Fig. 20 is a developmental view of a condition that the guide groove of the slide member shown in Fig. 19 corresponds to the projection of the one holder;
Fig. 21 is a developmental view of a condition that the projection is started to be inserted into the guide groove by rotating the movable member from a condition shown in Fig. 20;
Fig. 22 is a developmental view of a condition that the projection is positioned in the loading portion of the guide groove by further rotating the movable member from a condition shown in Fig. 21;
Fig. 23 is a developmental view of a condition that the projection of the holding member second from a top side shown in Fig. 22 is positioned in the loading portion of the guide groove;
Fig. 24 is a developmental view of a condition that the proj ection of the holding member second from a bottom side shown in Fig. 22 is positioned in the loading portion of the guide groove;
Fig. 25 is a plan view of an interlocking movable mechanism in the condition shown in Fig. 10;
Fig. 26 is a plan view of the interlocking movable mechanism in the condition shown in Fig. 11;
Fig. 27 is a plan view of the interlocking movable mechanism in the condition shown in Fig. 17;
Fig. 28 is a plan view of the interlocking movable mechanism in the condition shown in Fig. 18;
Fig. 29 is a plan view of the interlocking movable mechanism in the condition shown in Fig. 19;
Fig. 30 is a plan view of the interlocking movable mechanism in the condition shown in Fig. 20;
Fig. 31 is a plan view of the interlocking movable mechanism in the condition shown in Fig. 23;
Fig. 32 is a plan view of the interlocking movable mechanism in the condition shown in Fig. 24;
Fig. 33 is a plan view showing the movable chassis and the disk playback unit of the main body of the CD changer shown in Fig. 1;
Fig. 34 is a plan view of a condition that the disk playback unit shown in Fig. 33 penetrates between plural CDs;
Fig. 35 is a plan view of a condition that the disk playback unit shown in Fig. 34 plays back the CD;
Fig. 36 is a plan view of a lock unit and the disk playback unit positioned in a lock position of the CD changer shown in Fig. 33;
Fig. 37 is a plan view of a condition that a pick-up unit of the disk playback unit shown in Fig. 36 is positioned in an unclamp position;
Fig. 38 is a plan view of a condition that a clamp unit of the disk playback unit shown in Fig. 37 clamps the CD, and the pick-up unit thereof is positioned in a playback position;
Fig. 39 is a plan view of a condition that the lock unit shown in Fig. 38 is positioned in the unlock position;
Fig. 40A is a partial cross-sectional side view taken along the line A-A in Fig. 36;
Fig. 41B is a partial cross-sectional side view taken along the lineB-B in Fig. 37;
Fig. 42C is a partial cross-sectional side view taken along the line C-C in Fig. 38;
Fig. 43D is a partial cross-sectional side view taken along the line D-D in Fig. 39;
Fig. 44E is a cross-sectional view taken along the line E-E in Fig. 36;
Fig. 45F is a cross-sectional view taken along the line F-F in Fig. 39;
Fig. 46G is a cross-sectional view taken along the line G-G in Fig. 36; and
Fig. 47H is a cross-sectional view taken along the line H-H in Fig. 39.

### MARKINGS

- 1: CD changer (Recording medium playback apparatus)
- 2: CD (Recording medium)
- 3: Main body
- 67: Clamp unit
- 69: Pick-up unit
- 70: Lock device (Lock unit)
- 71: Clamp lock/unlock unit
- 72: Turntable
- 72a: Surface
- 74: Movable member
- 75: Clamp hook (Extract/retract member)
- 81: First insert portion
- 90: Cutout
- 91: Rotating member
- 91a: One end portion
- 91b: Other end portion
- 92: Second insert portion

### DESCRIPTION OF THE BEST MODE

One embodiment according to this invention will be described herein. In a recording medium playback apparatus according to the embodiment, in an unlock position in which a lock unit makes a clamp unit movable, unlock of clamping of clamp unit is limited and, in a lock position in which the lock unit locks the clamp unit, unlock of clamping of the clamp unit is allowed by a clamp lock/unlock unit. Thereby, in the unlock position where the clamp unit is made movable against the main body, that is during playing back the recording medium, it is prevented that clamping of the recording medium is unlocked.

According to the present invention, the clamp unit can include the turntable and the pick-up unit, and the clamp lock/unlock unit in the unlock position, in which the lock unit makes the clamp unit movable, can limit the pick-up unit to move to an unclamp position and, in the lock position, in which the lock unit lock the clamp unit, allow the pick-up unit to move to the unclamp position.

The clamp lock/unlock unit can have the cutout, which is provided at the pick-up unit, and a rotating member, rotatably against the main body, an end of which can penetrate into the cutout. The pick-up unit can include a first insert portion, which can penetrate between the turntable of the clamp unit and the rotating member, and the other end of the rotating member can include a second insert portion which can penetrate between the turntable of the clamp unit and the rotating member.

### DESCRIPTION OF EMBODIMENTS

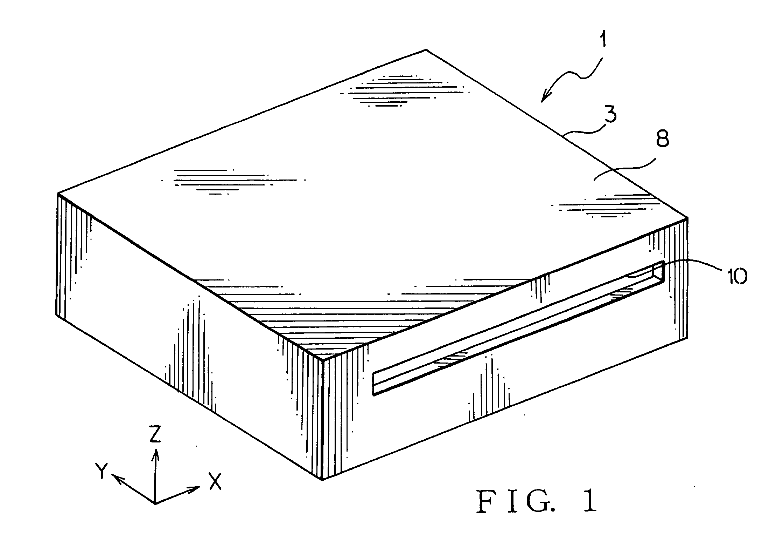

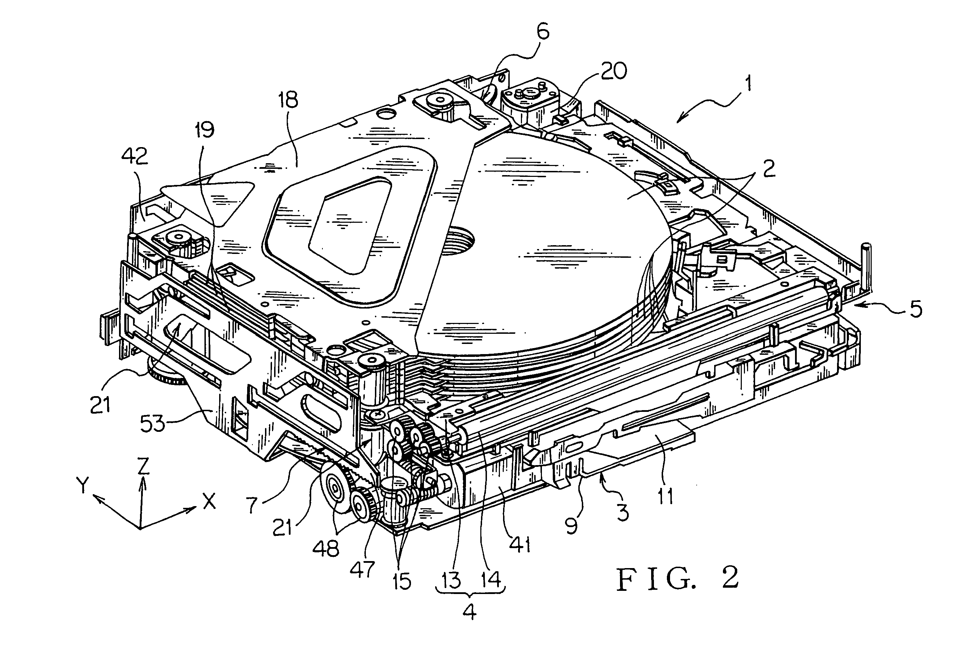

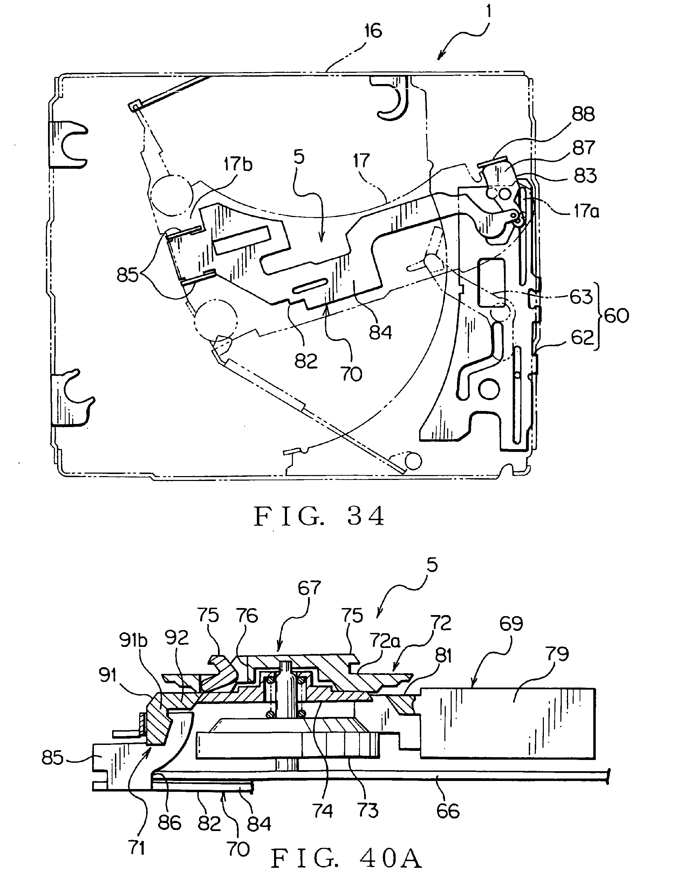

CD changer 1 as a recording medium playback apparatus of one embodiment according to the present invention will be described with reference to Figs. 1-47. The CD changer 1 as shown in Fig. 1 is installed in a vehicle like a car as a sound apparatus for storing plural CDs 2 (shown in Fig. 2) as a recording medium and outputting sounds and voices by reading (playing back) information recorded on any one of the CDs 2. The CD 2 formed into a circular plate, that is a disc-shape, is a recording medium to store information which can be read by an electronic device like a computer.

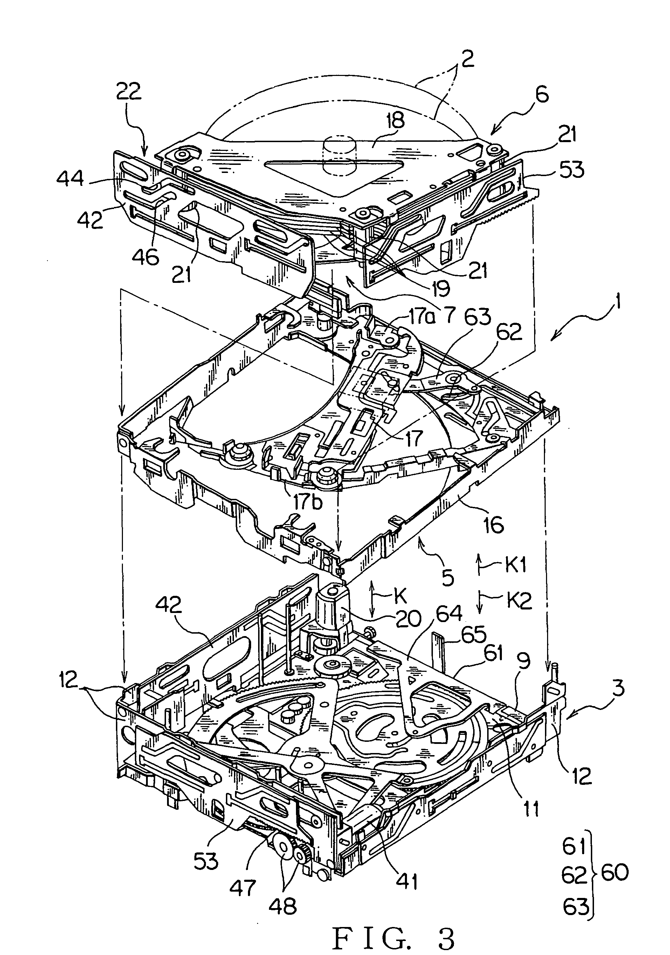

The CD changer 1, as shown in Fig. 2, includes a main body 3 (shown in Fig. 1), an operation panel (not shown), a disk conveying unit 4, an interlocking drive unit 60 (shown in Fig. 3), a disk playback unit 5, a disk receiving unit 6, and a disk positioning mechanism 7. A direction shown with an arrow X in Fig. 2 is defined as a widthwise direction of the CD changer 1, and a direction shown with an arrow Y in Fig. 2 is defined as a depthwise direction of the CD changer 1, and a direction shown with an arrow Z in Fig. 2 is defined as a heightwise direction of the CD changer 1.

The main body 3 includes an outer case 8 made of synthetic resin shown in Fig. 1, a fixed chassis 9 made of a sheet metal shown in Fig. 2, a movable chassis 16 as a second support member, a swing chassis 17, and a movable chassis 18 as a hold member and a first wall shown in Fig. 3. The outer case 8 is formed into a flat box-shape. The outer case 8 is provided with an insertion opening 10, through which the CD 2 can be inserted/ejected. The insertion opening 10 pierces an outer wall of the outer case 8. The insertion opening 10 can passes the CD 2 through an inside thereof. Through the insertion opening 10, the CD 2 is received into the outer case 8, that is the main body 3, and ejected out of the main body 3.

The fixed chassis 9 is received in the outer case 8 so as to be fixed on the outer case 8. The fixed chassis 9, as shown in Fig. 3, includes a tabular bottom plate 11, and a surrounding wall 12 extending from outer edges of the bottom plate 11. The bottom plate 11 is piled on a wall, arranged at a lower side in Fig. 1, of the outer case 8.

The operation panel is a separated body from the main body and is connected to the main body. The operation panel is operated by a user of the CD changer 1 pushing it. The operation panel operated by the user is used for selecting a later-described holder 19 to hold the CD 2 inserted through the insertion opening 10 in the main body 3. The operation panel operated by the user is used for selecting the holder 19 holding the CD 2 to be ejected through the insertion opening 10 in the main body 3. The operation panel operated by the user is used for selecting the CD 2 to be read information from among the CDs held by the plural holder 19.

The movable chassis 16 is formed into a frame shape with a sheet metal. The movable chassis 16 is supported movably along a direction where the holders 19 of the disk receiving unit 6 are piled on each other, that is a direction K (shown with an arrow in Fig. 3) where the plural CDs 2 are plied on each other, by the surrounding wall 12 of the fixed chassis 9.

The swing chassis 17 is formed into a band shape with the sheet metal. The swing chassis 17 is supported rotatably around one end portion 17a by the movable chassis 16. Since the swing chassis 17 rotates around the one end portion 17a, the swing chassis 17 can move freely between a condition in which the other end portion 17b penetrates between plural CDs 2 received in the disk receiving unit 6 and a condition in which the other end portion 17b moves out of the plural CDs received in the disk receiving unit 6.

The movable chassis 18 is formed into plate shape with a sheet metal. The movable chassis 18 is arranged with a space in parallel to the bottom plate 11 of the fixed chassis 9. The movable chassis 18 arranges the disk playback unit 5 between the bottom plate 11 of the fixed chassis 9 and itself. The movable chassis 18 is supported movably along the aforesaid arrow K by the surround wall 12.

The disk conveying unit 4 is received in the main body 3, and includes a roller arm 13 and a roller 4 as shown in Fig. 2. The roller arm 13 is formed into a band shape, which lengthwise is along the widthwise direction X of the main body 3, with the sheet metal. The roller arm 13 is arranged in the vicinity of the insertion opening 10 and mounted on the fixed chassis 9 of the main body 3.

The roller 14 is supported rotatably around an axis thereof by the roller arm 13. The axis of the roller 14, that is a lengthwise, is arranged along the widthwise direction X of the CD changer 1. An outer surface of the roller 14 touches the CD 2 passed through the insertion opening 10. The roller 14 is rotated around the axis through plural gears 15 by a later-described motor 41 as a second drive source. The CD 2 touches the outer surface of the roller 14, and the roller 14 is rotated by the motor 41, so that the disk conveying unit 4 passes the CD 2 through the insertion opening 10.

The interlocking drive unit 60 includes a first slide chassis 61, a second slide chassis 62, and a swing arm 63 as shown in Fig. 3. The first slide chassis 61 is made of the sheet metal, and includes a horizontal portion 64 and vertical portion 65 as an integrated one. The horizontal portion 64 is formed into a plate shape, and piled on the tabular bottom plate 11 of the fixed chassis 9.

The horizontal portion 64 is supported slidably along a lengthwise direction of the swing chassis 17 in a condition, which the other end portion 17b moves out of a space between the plural CDs 2, by the bottom plate 11. The horizontal portion 64 moves along the lengthwise direction of the swing chassis 17 in the condition, which the other end portion 17b moves out of a space between the plural CDs 2, by a driving force of a later-described motor 20 of the disk positioning mechanism 7. The vertical portion 65 extends upwardly, that is toward the second slide chassis 62, from an edge of the horizontal portion 64.

The second slide chassis 62 is formed into a plate shape with a sheet metal. The second slide chassis 62 is arranged between the movable chassis 16 and the bottom plate 11 and piled on the movable chassis 16. The second chassis 62 is supported slidably along the lengthwise direction of the swing chassis 17 in the condition, which the other end portion 17b moves out of the space between the plural CDs 2, by the movable chassis 16.

The second slide chassis 62 is locked with the aforesaid vertical portion 65. Thereby, the second slide chassis 62 moves together with the vertical portion 65 along the lengthwise direction of the swing chassis 17 in the condition, which the other end portion 17b moves out of the space between the plural CDs 2, by the driving force of the motor 20.

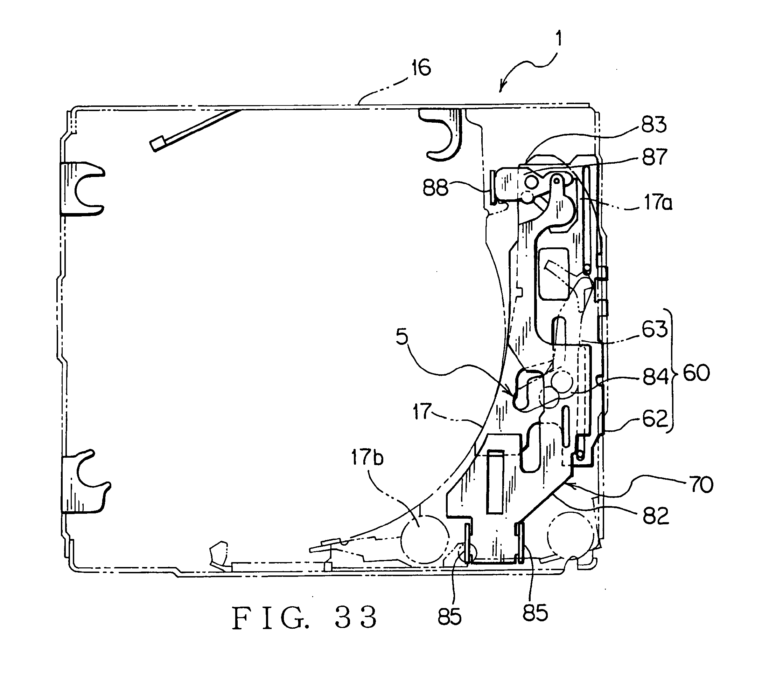

The swing arm 63 is formed into a plate shape with the sheet metal. The swing arm 63 is formed into an L-shape in plan view, as shown in Figs. 33-35. The swing arm 63 is supported rotatably around a center portion thereof by the movable chassis 16. One end of the swing arm 63 is connected to the second slide chassis 62. When the second slide chassis 62 slides along the aforesaid lengthwise direction, the swing arm rotates around the center portion so as to swing the swing chassis 17 around the one end portion 17a of the swing chassis 17.

The interlocking drive unit 60 moves the first slide chassis 61 and the second slide chassis 62 by the driving force of the motor 20, and swing the swing chassis 17 around the one end portion 17a by rotating the swing arm 63.

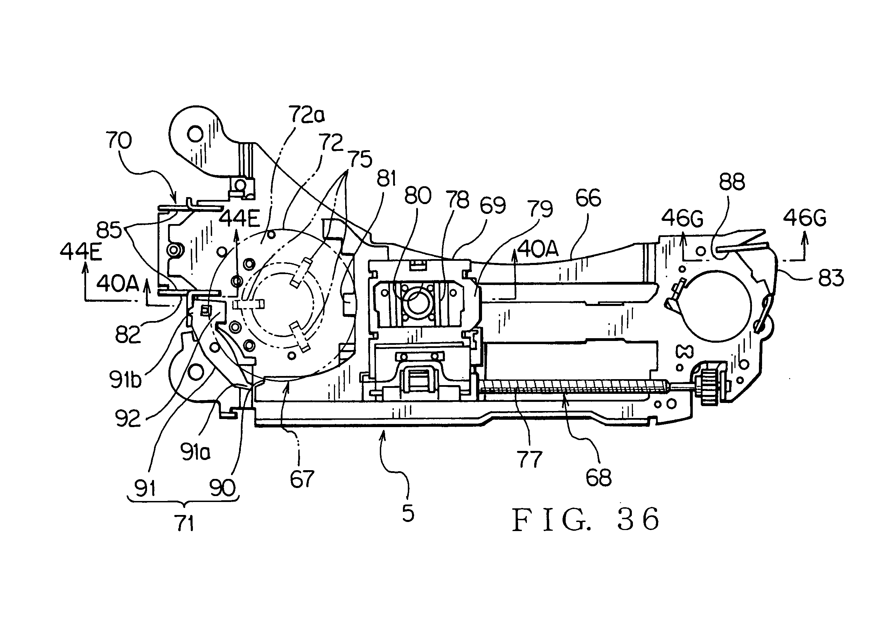

The disk playback unit 5 is received in the man body 3, and arranged at the swing chassis 17. The disk playback unit 5 includes a movable frame 66, a clamp unit 67, a pick-up moving portion 68, a pick-up unit 69, a lock device 70 as a lock unit, and a clamp lock/unlock unit 71, as shown in Figs. 36-39.

The movable frame 66 is formed into a plate shape with the sheet metal. The movable frame 66 is arranged between the swing chassis 17 and the movable chassis 18 and piled on the swing chassis 17. The movable frame 66 is supported by a rubber or coil spring so as to move freely against the swing chassis 17. Thereby, the movable frame 66, that is the clamp unit 67 and the pick-up unit 69, is supported movably against the swing chassis 17, that is the main body 3.

The CD changer 1 is installed in the car, so that the main body 3 is vibrated by vibration of the car in driving. Thereby, the movable frame 66, that is the disk playback unit 5, moves against the main body 3 by the rubber or the coil spring. Thus, influence by the aforesaid vibration on reading information of the CD 2 by the pick-up unit 69 of the disk playback unit 5 is reduced by that the movable frame 66 is supported movably against the main body 3 by the rubber or the coil spring.

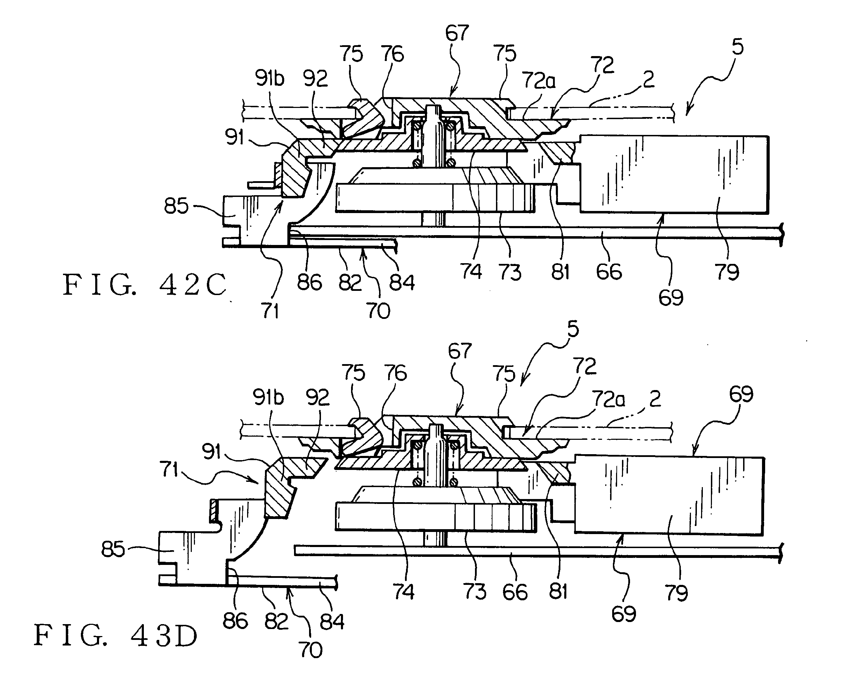

The clamp unit 67 includes a turntable 72, a spindle motor 73, movable member 74, and a plurality of clamp hooks 75 as an extract/retract member, as shown in Fig. 40A. The turntable 72 is located at the other end portion 17b of the swing chassis 17, and supported rotatably by the movable frame 66. The turntable 72 is formed into a disk shape. The CD 2 is mounted on a surface 72a of the turntable. A plurality of holes 76 is formed in the turntable. The holes 76 penetrate the turntable 72. In the embodiment, three holes 76 are provided. The holes 76 are arranged perpendicularly to the surface 72a in even intervals around an axis of the turntable 72.

The spindle motor 73 is located between the movable frame 66 and the turntable 72, and at the other end 17b of the swing chassis 17. The spindle motor 73 is fixed on the movable frame 66, and an output shaft thereof is fixed on the center of the turntable 72. The spindle motor 73 rotates the turntable 72 around the aforesaid axis.

The movable member 74 is formed into a ring shape. The movable member 74 is arranged between the spindle motor 73 and the turntable 72 so as to pass the output shaft of the spindle motor 73 through an inside of the movable member 74. The movable member 74 is arranged coaxially with the turntable 72 and the spindle motor 73. The movable member 74 is provided movable along the aforesaid axis. Thereby, the movable member 74 can move freely along a direction perpendicular to the surface 72a of the turntable 72. The movable member 74 is biased in a direction to become close to the turntable by a coil spring.

The clamp hooks 75 are formed into an L-shape in side view as shown in Fig. 40A. The clamp hooks 75 are located between the turntable 72 and the movable member 74, and in the hole 76. Thereby, the clamp hooks 75 are arranged between the turntable 72 and the movable member 74.

So as to move the clamp hook 75 freely between a clamp location, in which one end portion of the clamp hook 75 projects through the hole 76 from the surface 72a, (shown in Fig. 40A) and an unclamp location, in which the one end portion retracts under the surface 72a, (shown in Fig. 40A), the other end of the clamp hook 75 is supported rotatably by the turntable 72.

The one end portion of the clamp hook 75 projects from the surface 72a when the movable member 74 moves close to the turntable 72 as shown in Fig. 40A. The one end portion moves downwardly by own weight of the clamp hook 75 when the movable member 74 moves apart from the turntable 72 as shown in Fig. 41B. Thus, when the movable member 74 moves apart from the turntable 72, the one end portion retracts under the surface 72a.

The one end portion of the clamp hook 75 projects from the surface 72a, and projects into a center hole of the CD 2 on the turntable 72 so as to clamp the CD 2 between the turntable 72 and itself. The clamp hooks 75 clamp the CD 2 by that the one end portions of the clamp hooks 75 clamp the CD 2 between the turntable 72 and itself.

The pick-up moving portion 68 is located between the movable frame 66 and the movable chassis 18, and above the movable frame 66. The pick-up moving portion 68 includes a motor (not shown) and a lead screw 77. The motor is located at the one end portion 17a of the swing chassis 17, and fixed on the movable frame 66. A worm is arranged on an output shaft of the motor. The worm engages with a worm wheel attached to the lead screw 77.

The lead screw 77 is supported rotatably around its axis by the movable frame 66. Lengthwise of the lead screw 77 is in parallel to lengthwise of the swing chassis 17. The lead screw 77 is rotated around its axis through the worm and the worm wheel by the motor. In the pick-up moving portion 68, the pick-up unit 69 is slid along the lengthwise of the lead screw 77 and the swing chassis 17 by rotating the lead screw 77, and thereby, the pick-up unit 69 moves close to and apart from the turntable 72.

The pick-up unit 69 includes an optical pick-up 78 as a pick-up, and a pick-up case 79. The optical pick-up 78 reads out information from the CD 2 supported by the turntable 72. The pick-up case 79 is formed into a box shape and includes a window 80 which can pass a read-out light (main beam) outgoing from the optical pick-up 78, and a screwed hole engaged with the lead screw 77. By engaging the screwed hole with the lead screw 77, the pick-up case 79 moves along the lengthwise of the lead screw 77 when the lead screw rotates.

The pick-up unit 69 is moved along the lengthwise of the swing chassis 17, that is the length of the lead screw 77, by the pick-up moving portion 68 so as to move close to and apart from the turntable 72. The pick-up unit 69 reads out the information from the CD 2 supported by the turntable 72.

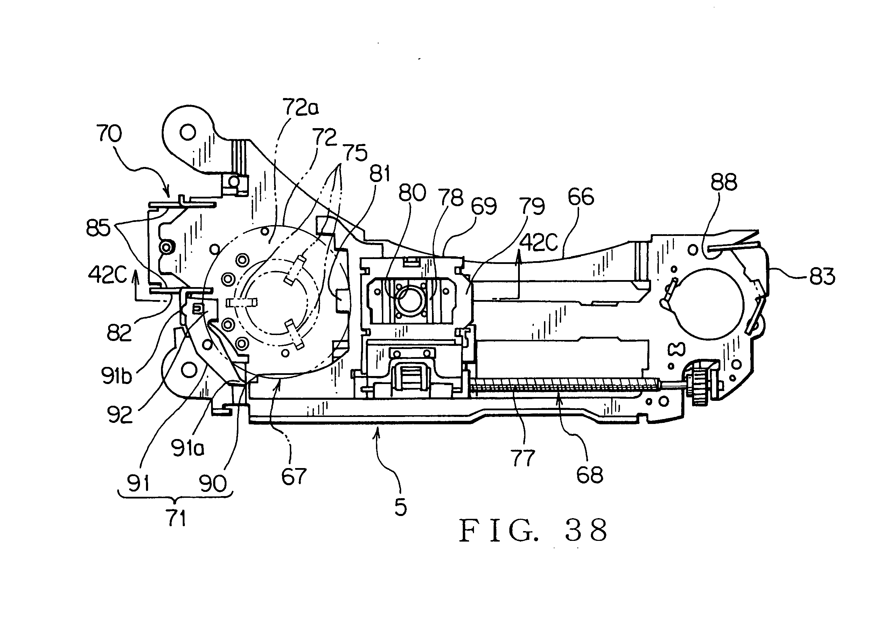

The pick-up case 79, that is the pick-up unit 69, is provided with a first insert portion 81 as shown in Fig. 38. The first insert portion 81 is formed to project from the pick-up case 79 toward the turntable 72. The first insert portion 81 is formed to be thinner gradually from the pick-up case 79 toward the turntable 72.

The first insert portion 81 can penetrate between the turntable 72 and the movable member 74 when the pick-up case 79, that is the pick-up unit 69, moves close to the turntable 72. When the pick-up case 79, that is the pick-up unit 69, moves close to the turntable 72, the first insert portion 81 penetrates between the turntable 72 and the movable member 74 so as to separate the movable member 74 from the turntable 72 and move the movable member 74 to the aforesaid unclamp location.

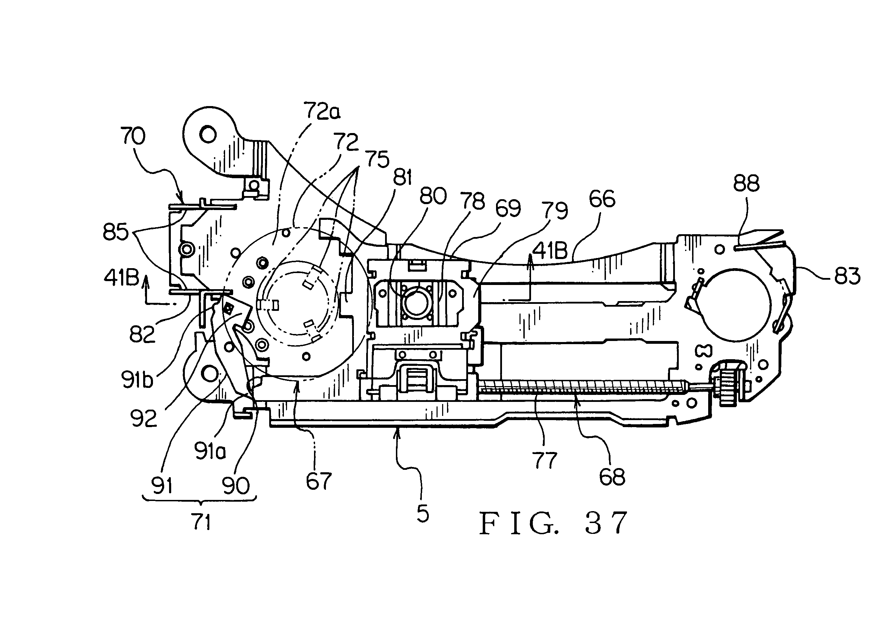

According to an aforesaid structure, the pick-up unit 69 moves close to and apart from the turntable 72 between an unclamp position (shown in Figs. 37, 41B), in which the pick-up unit 69 moves close to the turntable 72 and the first insert portion 81 penetrates between the turntable 72 and the movable member 74 so as to separate the movable member 74 from the turntable 72, and the playback position (shown in Figs. 36, 40A), in which the pick-up unit 69 separates from the turntable 72 farther than the unclamp position, and the first insert portion 81 does not penetrate between the turntable 72 and the movable member 74 so as to preserve the movable member 74 close to the turntable 72. Thus, the pick-up unit 69 is provided movably between the unclamp position and the playback position.

In the unclamp position, the first insert portion 81, that is the pick-up unit 69, preserves the clamp unit 67 in the aforesaid unclamp location and unlocks the clamping of the CD 2 on the turntable 72. In the playback position, the first insert portion 81, that is the pick-up unit 69, preserves the clamp unit 67 in the aforesaid clamp location and clamps the CD 2 on the turntable 72, so that the information of the CD 2 can be read out.

The lock device 70 includes a first lock member 82 and a second lock member 83 as shown in Figs. 33-35. The first lock member 82 and the second lock member 83 are arranged between the swing chassis 17 and the movable frame 66. The first lock member 82 made of the sheet metal includes a band-shaped main body 84 and a lock hook 85 as an integrated one. The first lock member 82 is supported by the swing chassis 17 so as to make lengthwise of the main body 84 in parallel to the lengthwise of the swing chassis 17. The first lock member 82 is supported slidably along the lengthwise of the swing chassis 17 by the swing chassis 17.

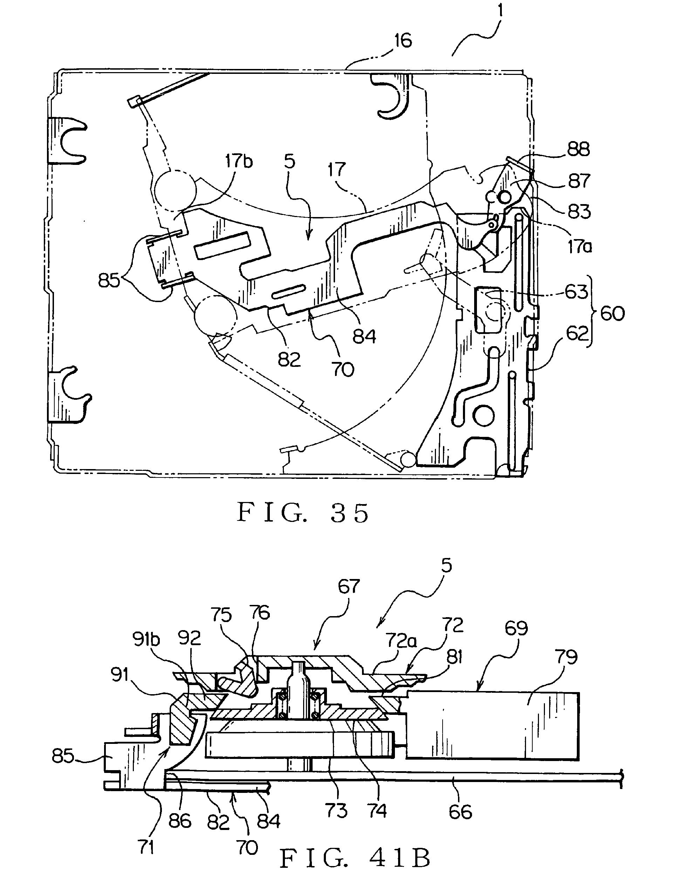

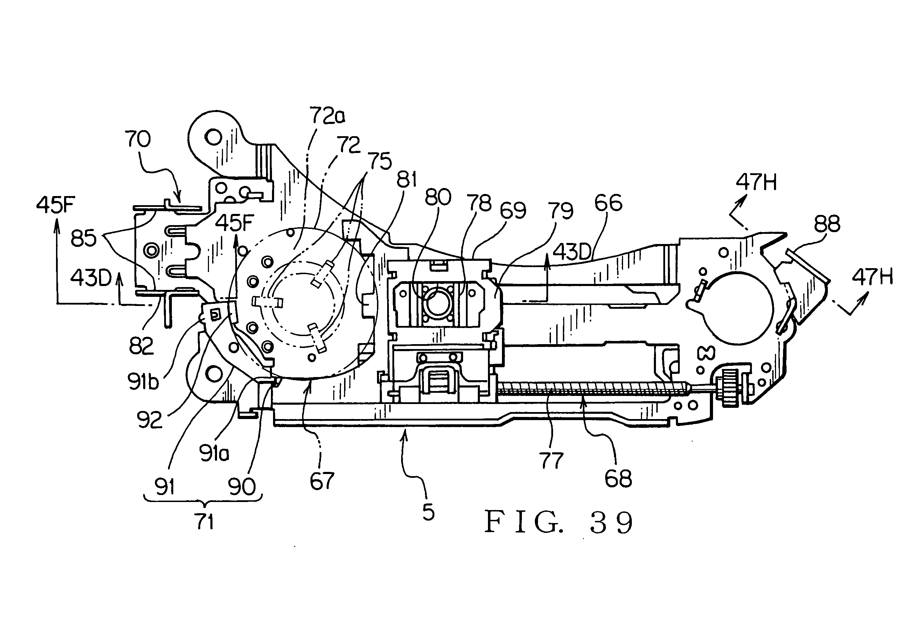

The lock hook 85 is provided at one end of the main body 84, near to the other end portion 17b of the swing chassis 17. The lock hook 85 extends vertically from the main body 84. When the first lock member 82 slides, the lock hook 85 moves freely between the unlock position (shown in Figs. 35, 39), in which the lock hook 85 projects from an edge of the other end portion 17b of the swing chassis 17, and the lock position (shown in Figs. 33, 36), in which the lock hook 85 overlaps with the other end portion 17b of the swing chassis 17.

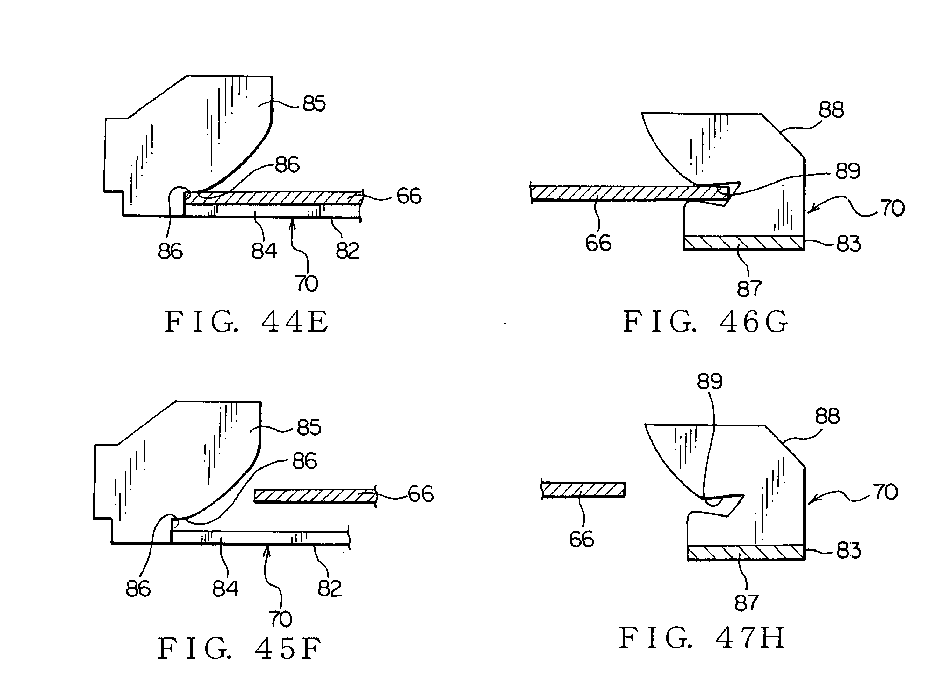

The lock hook 85 is provided at an edge thereof near the main body 84 with a recess 86, which corresponds to the movable frame 66 in the unlock position, and positions the movable frame 66 inside thereof in the lock position, as shown in Figs. 44E, 45F. The recess 86 is formed to dent the edge of the lock hook 85 near the main body 84 to be apart from the movable frame 66.

The first lock member 82 positions the movable frame 66 in the recess 88 in the lock position, and the lock hook 85 locks the movable frame 66. When the lock hook 85 locks the movable frame 66, the first lock member 82 limits (fixes) the movable frame 66 to move against the swing chassis 17, that is the main body 3.

The second lock member 83 made of the sheet metal includes a band-shaped main body portion 87 and an lock hook 88 as an integrated one as shown in Figs. 33-35. The second lock member 83 is supported rotatably around a center area thereof by the swing chassis 17. One end of the main body portion 87 of the second lock member 83 is connected rotatably with the other end of the first lock member 82.

The other end of the main body 87 is provided with the lock hook 88. The lock hook 88 extends vertically from the main body 87. When the second lock member 83 rotates, the lock hook 88 moves freely between the unlock position (shown in Figs. 35, 39), in which the lock hook 88 projects from an edge of.the one end portion 17a of the swing chassis 17, and the lock position (shown in Figs. 33, 36), in which the lock hook 88 overlaps with the one end portion 17a of the swing chassis 17.

The lock hook 88 is provided with a slit 89, which corresponds to the movable frame 66 in the unlock position, and positions the movable frame 66 inside thereof in the lock position, as shown in Figs. 46G, 47H. The slit 89 penetrates through the lock hook 88. The slit 89 is formed to dent the lock hook 88 to be apart from the movable frame 66.

The second lock member 83 positions the movable frame 66 in the slit 89 in the lock position, and the lock hook 88 locks the movable frame 66. When the lock hook 88 locks the movable frame 66, the second lock member 83 limits the movable frame 66 to move against the swing chassis 17, that is the main body 3.

Since the first lock member 82 and the second lock member 83 connect rotatably to each other, they move interlockingly between the aforesaid unlock position and the aforesaid lock position. When the first lock member 82 is in the unlock position, the second lock member 83 is positioned in the unlock position. When the first lock member 82 is in the lock position, the second unlock member 83 is positioned in the lock position. Furthermore, the first lock member 82 and the second lock member move between the aforesaid lock position and the aforesaid unlock position by sliding the aforesaid first and second slide chassis 61, 62.

The lock device 70 as structured above can move freely between the lock position, in which the lock hooks 85, 88 of the lock device 70 lock the movable frame 66 so as to fix the clamp unit 67 against the swing chassis 17, that is the main body 3, and the unlock position, in which the recess 86 of the lock hook 85 and the slit 89 of the lock hook 88 correspond with a space to the movable frame 66 and the clamp unit 67 can be movable against the swing chassis 17, that is the main body 3.

The clamp lock/unlock unit 71 includes a cutout 90 and a rotating member 91 as shown in Figs. 36-39. The cutout 90 is provided at the pick-up case 79, that is the pick-up unit 69. The cutout 90 is cut out between one end near the turntable 72 along the lengthwise of the swing chassis 17 of the pick-up case 79, that is the pick-up unit 69, and an inner edge near the turntable 72 along a circumference of the turntable 72.

The rotating member 91 is formed into a bar shape. The rotating member is located at the other end portion 17b of the swing chassis 17. The rotating member 91 is supported rotatably around a central portion thereof by the movable frame 66. One end portion 91a of the rotating member 91 can penetrate into the cutout 90 and the other end portion 91b can abut on the lock hook 85 of the first lock member 82.

When the one end portion 91a shown in Fig. 39 is made to penetrate into the cutout 90 by the movable frame 66, the rotating member 91 is limited to rotate in a direction of that the one end portion 91a furthermore approaches the turntable 72. Also, when the one end portion 91a shown in Fig. 39 penetrates into the cutout 90, the rotating member 91 is biased by, for example, a spring in the direction of that the one end portion 91a approaches the turntable 72.

The rotating member 91 abuts on the pick-up case 79 when the one end portion 91a shown in Fig. 39 penetrates into the cutout 90, and limits the pick-up unit 69 to approach the turntable 72 to the aforesaid unclamp position. When the rotating member 91 rotates in a direction of that the one end portion 91a shown in Fig. 39 rotates to move apart from the turntable 72 and the one end portion 91a shown in Fig. 36 goes out from the cutout 90, the rotating member 91 allows the pick-up unit 69 to approach the turntable 72 in the aforesaid unclamp position. When the one end portion 91a shown in Fig. 36 goes out from the cutout 90, the other end portion 91b of the rotating member 91 abuts on the lock hook 85 of the first lock member 82.

The rotating member 91 is provided at the other end portion 91b with a second insert portion 92. The second insert portion 92 is formed to project from the other end portion 91b of the rotating portion 91 toward the turntable 72. The second insert portion 92 is formed to be tapered from the other end portion 91b of the rotating member 91 toward the turntable 72 as shown in Fig. 40A. When the other end portion 91b of the rotating member 91 approached the turntable 72, the second insert portion 92 is allowed to penetrate between the turntable 72 and the movable member 74. When the other end portion 91b of the rotating member 91 approached the turntable 72, the second insert portion 92 penetrates between the turntable 72 and the movable member 74 so as to separate the removable member 74 from the turntable 72 to the unclamp location by working together with the aforesaid first insert portion 81.

In the clamp lock/unlock unit 71, when the lock device 70 is positioned in the aforesaid lock position, the other end portion 91b is pushed by the lock hook 85 of the first lock member 85, thereby the rotating member 91 rotates in the direction of that the one end portion 91a goes out from the cutout 90. Thus, the one end portion 91a of the rotating member 91 goes out from the cutout 90.

Therefore, when the lock device 70 is positioned in the aforesaid lock position, the clamp lock/unlock unit 71 allows the pick-up unit 69 to approach the turntable to the aforesaid unclamp position (the pick-up unit 69 to move to the unclamp position). In other words, when the lock device 70 is positioned in the lock position, the clamp lock/unlock unit 71 allows to unlock the clamping of the clamp unit 67.

In the clamp lock/unlock unit 71, when the lock device 70 is positioned in the unlock position, the lock hook 85 of the first lock member 82 moves apart from the other end portion 91b, and the one end portion 91a is held in the cutout 90 by a bias force, such as a spring force. Thereby, when the lock device 70 is positioned in the unlock position, the clamp lock/unlock unit 71 limits the pick-up unit 69 to approach the turntable 72 to the unclamp position (the pick-up unit 69 to move to the unclamp position). Thus, when the lock device 70 is positioned in the unlock position, the clamp lock/unlock unit 71 limits to unlock clamping of the clamp unit 67.

In the disk playback unit 5, the other end portion 17b of the swing chassis 17 penetrates between the CDs 2, and the clamp hooks 75 of the clamp unit 67 clamp the CD 2, and the turntable 72 rotates the CD 2. In the disk playback unit 5, the optical pick-up 78 of the pick-up unit 69 reads out information from the CD 2 rotated by the turntable 72.

The disk receiving unit 6 is provided in the main body 3, and includes the plural holders 19 as a plurality of holding member, as shown in Fig. 3.

The holder 19 is formed into a plate shape with synthetic resin. The holder 19 is formed into C-shape in plan view. The holders 19 are supported in parallel both to the bottom plate 11 and the movable chassis 18 by the movable chassis 18. The holders 19 are arranged to make an open side of the C-shape correspond to the insertion opening 10.

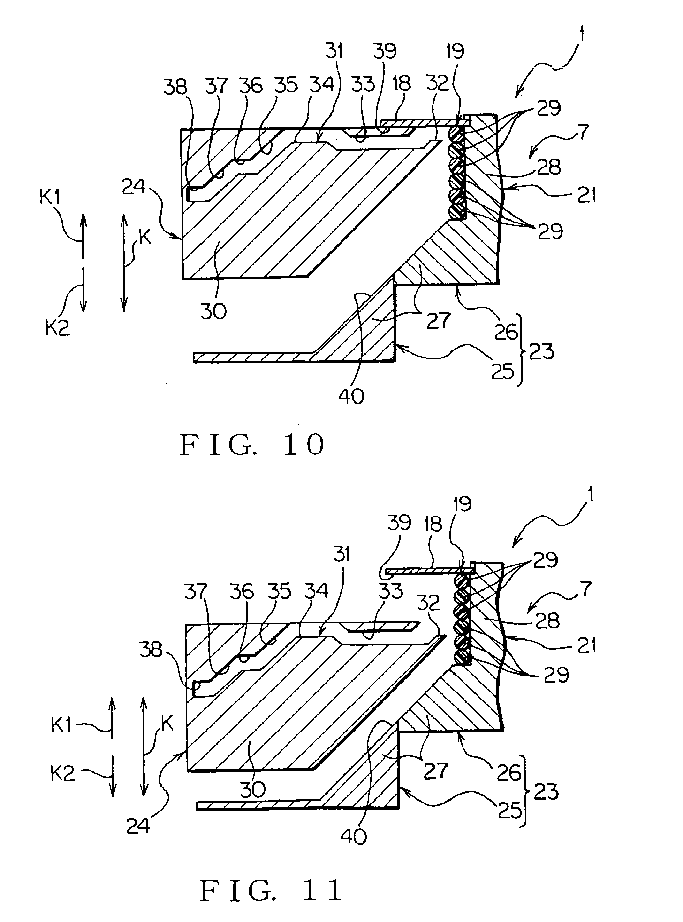

The CD 2 to be inserted through the insertion opening 10 into the main body 3 penetrates through the open side into an inside of the holder 19, thereby the CD 2 is held by the holder 19. The plural holders 19 to be piled are arranged so as to make surfaces of the CDs 2 held by the holders 19 in parallel to each other. The holders 19 are supported movably along the aforesaid arrow K by the movable chassis 18. The holders 19 are respectively provided with a projection 29 (shown in Figs. 10-24) projecting outwardly.

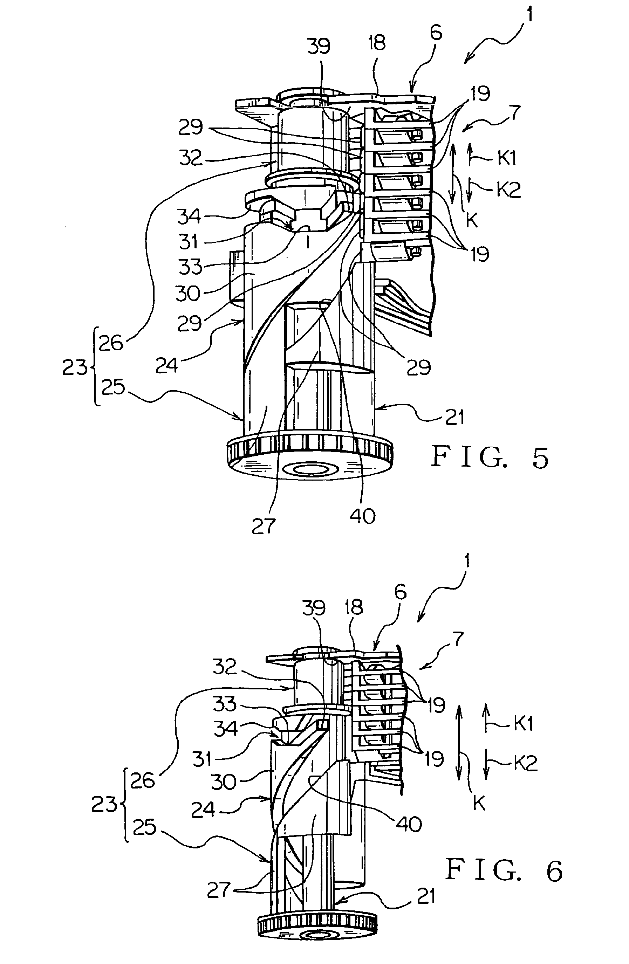

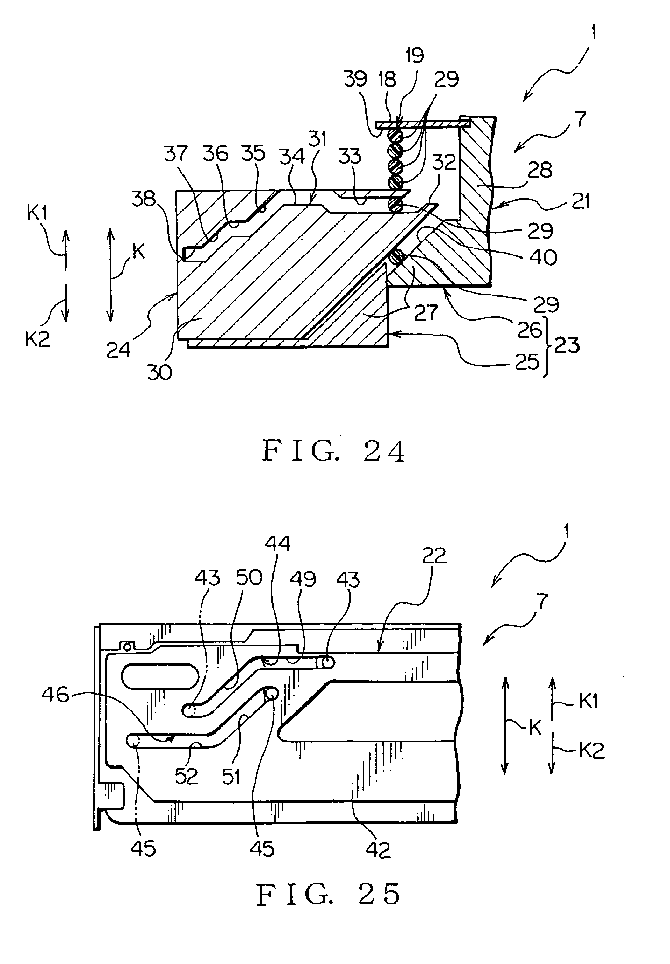

The disk positioning mechanism 7 is provided in the main body 3, and includes the motor 20 (shown in Fig. 3) as a driving force, a separated-groove expand/shrink mechanism 21 (shown in Figs. 5-9), and an interlocking movable mechanism 22 (shown in Figs. 25-32). The motor 20 is fixed on the fixed chassis 9 as shown in Fig. 3.

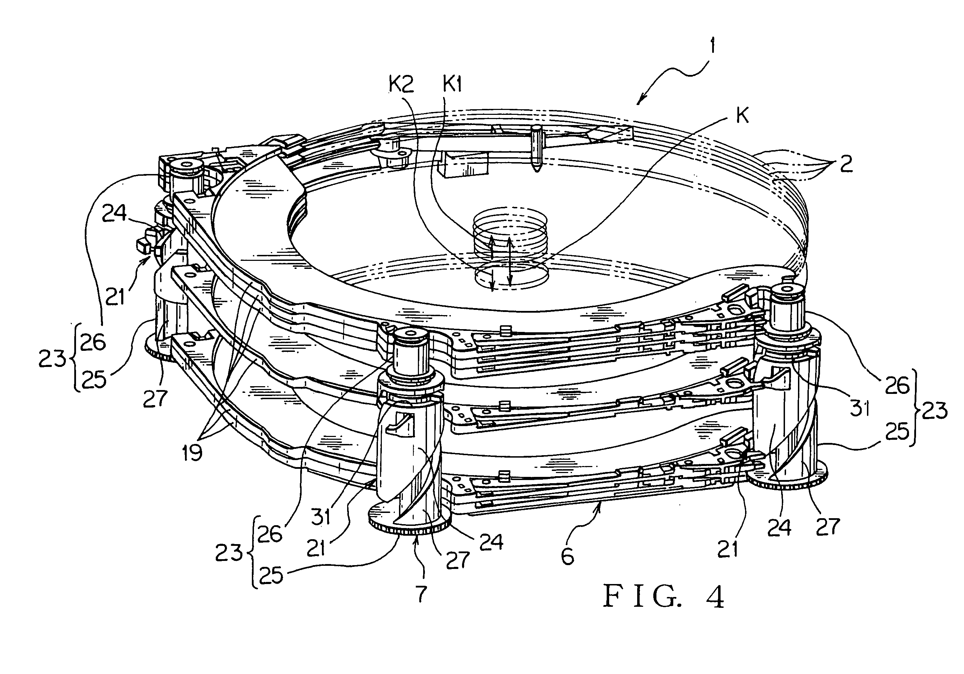

Tree separated-groove expand/shrink mechanisms 21 are provided in corners of the main body 3 as shown in Fig. 4. The separated-groove expand/shrink mechanism 21 is formed into a cylindrical shape as shown in Figs. 5-9, and includes a movable member 23 and a slide member 24. The movable member 23 includes a member body 25 and a second slide member 26.

The member body 25 is formed into a cylindrical shape, and supported rotatably around its axis by the bottom plate 11 of the fixed chassis 9. The member body 25 extends vertically from the bottom plate 11. The axis of the member body 25 is aligned in parallel to the arrow K. The member body 25 is rotated around the axis by the driving force of the motor 20. "Rotating the member body 25 around the axis by the driving force of the motor 20" means "moving the member body 25 by the driving force of the motor 20", described in the specification.

The second slide member 26 is formed into a cylindrical shape, and arranged coaxially around an outer wall of the member body 25. The second slide member 26 and the member body 25 are connected to each other with a key. The second slide member 26 is mounted movably along the arrow K on the member body 25. The second slide member 26 rotates around the axis as an integrated one (interlockingly) with the member body 25.

In the aforesaid movable member 23, the movable chassis 18 as the first wall is mounted, and a second wall 27 and a connecting wall 28 are provided. The movable chassis 18 and the second wall 27 are arranged respectively at the both ends of the movable member 23 with a space to each other in an axial direction. Thereby, the movable chassis 18 and the second wall 27 project outwardly in a radial direction from both end of the movable member 23.

The movable chassis 18 is mounted at an end of the movable member 23, apart from the bottom plate 11 of the fixed chassis 9 of the second slide member 26. In other words, in the specification, it is described that the movable chassis 18 as the first wall is mounted at the movable member 23. The second slide member 26 moves along the arrow K as an integrated one (interlockingly) with the movable chassis 18. The movable chassis 18 is formed into a plate shape along a direction perpendicular to the arrow K.

The second wall 27 is provided between the member body 25 and the second slide member 26 and at an end of the movable member 23 near the bottom plate 11 of the fixed chassis 9. The second wall 27 projects outwardly in a radial direction from the edge of the movable member 23. The second wall 27 is formed into a ring shape. The second wall 27 extends both in a direction of the arrow K and in a direction perpendicular to the arrow K so as to be apart gradually from the movable chassis 18 in accordance with a distance from the second slide member 26 toward the member body 25.

In an area other than one area in which a later-described wedge 30 of the slide member 24 is positioned along the arrow K between the movable chassis 18 and the second wall 27, a space between the movable chassis 18 and the second wall 27 is equal or substantially equal to a product of multiplying number of the holders 19 by a width of the projection 29 in the direction of arrow K. The connecting wall 28 is provided at the second slide member 26, and extends linearly along the arrow K for connecting the movable chassis 18 and the second wall 27 to each other.

The movable member 23 positions the projection 29 between the movable chassis 18 and the second wall 27, and holds the holders 19. The movable member 23 rotating around its axis allows the projection 29 to move close to and apart from the connecting wall 28 along a direction intersecting the arrow K between the movable chassis 18 and the second wall 27. Therefore, the movable member 23 is moved toward a deep area of a later-described separated groove 39, 40 in a direction of that the projection 29 penetrates by the driving force of the motor 20. Furthermore, in a later-described receiving position, the movable member 23 positions the projections 29 of all holders 19 between the movable chassis 18 and the second wall 27.

The slide member 24 is formed into a cylindrical shape, and arranged coaxially around an outer wall of the member body 25. The slide member 24 and the member body 25 are connected to each other with a key. The slide member 24 is mounted movably along the arrow K on the member body 25. The slide member 24 rotates around the axis as an integrated one (interlockingly) with the member body 25. The slide member 24 is also mounted on the movable chassis 16 of the disk playback unit 5,and moves along the arrow K as an integrated one (interlockingly) with the movable chassis 16, that is the aforesaid optical pick-up 78.

The slide member 24 includes the wedge 30 and a guide groove 31. The wedge 30 is positioned between the movable chassis 18 and the second wall 27 to have a space between the connecting wall 28. Thereby, the wedge 30 of the slide member 24 moves between the movable chassis 18 and the second wall 27 along the arrow K. The wedge 30 is formed to make its width along the arrow K narrower gradually toward the second slide member 26.

The guide groove 31 is provided at the wedge 30. The guide groove 31 is formed on an outer surface of the wedge 30 of the slide member 24. Thus, the guide groove 31 is formed to recess from the outer surface of the wedge 30 of the slide member 24. A width of the guide groove 31 along the arrow K is substantially equal to a width of one projection 29 along the arrow K. As shown in Figs. 10-24, the guide groove 31 includes an opening 32 corresponding to the connecting wall 28 , a loading portion 33 , a pick-up-inserting portion 34, a first connecting portion 35, a clamp portion 36, a second connecting portion 37 and a playback portion 38. The loading portion 33, the pick-up-inserting portion 34, the clamp portion 36 and the playback portion 38 extend along a direction perpendicular to the arrow K. The first connecting portion 35 and the second connecting portion 37 extend both along the arrow K and the direction perpendicular to the arrow K.

The loading portion 33 is continued to the opening 32 and located at a side, apart from the connecting wall 28, of the opening 32. The pick-up-inserting portion 34 is continued to the loading portion 33 and located at a side, apart from the connecting wall 28, of the loading portion 33. The pick-up-inserting portion 34 is located at a side, apart from the second wall 27, of the member body 25.

The first connecting portion 35 is continued to the pick-up-inserting portion 34, and located at a side, apart from the connecting wall 28, of the pick-up-inserting portion 34. The first connecting portion 35 extends gradually toward the second wall 27 of the member body 25 in accordance with separating from the pick-up-inserting portion 34. The clamp portion 36 is continued to the first connecting portion 35 and located at a side, apart from the connecting wall 28, of the first connecting portion 35. The second connecting portion 37 is continued to the clamp portion 36, and located at a side, apart from the connecting wall 28, of the clamp portion 36. The second connecting portion 37 extends gradually toward the second wall 27 of the member body 25 in accordance with separating from the clamp portion 36. The playback portion 38 is continued to the second connecting portion 37 and located at a side, apart from the connecting wall 28, of the second connecting portion 37.

The guide groove 31 allows the projection 29 to penetrate through the opening 32. Furthermore, the guide groove 31 allows the projection 29 to move in order into the pick-up-inserting portion 34, the first connecting portion 35, the clamp portion 36, the second connecting portion 37 and the playback portion 38.

The holder 19 having the projection 29, which is positioned in the loading portion 33, corresponds to the insertion opening 10 along the arrow Y. The holder 19 having the projection 29, which is positioned in the loading portion 33, can hold the CD 2 inserted through the insertion opening 10, and eject the CD 2 held through the insertion opening 10 to an outside of the main body 3.

The holder 19 having the projection 29, which is positioned in the pick-up-inserting portion 34, allows the other end 17b of the swing chassis 17, that is the pick-up unit 69, to move apart from the other holder 19 positioned at a lower side in Fig. 2 and penetrate between the holder 19 at a lower side in Fig. 2. The holder 19 having the projection 29 positioned in the clamp portion 36 allows the clamp unit 67 of the disk playback unit 5 to clamp the CD 2, which is held. The holder 19 having the projection 29, which is positioned in the playback portion 38, is moved apart from the CD 2 clamped on the clamp unit 67 so as not to interfere (touch) with the CD 2 to be rotated by the turntable, that is to allow the CD 2 to rotate.

A space between the aforesaid movable chassis 18 and the wedge 30 of the slide member 24 corresponds to the first separated groove 39 described in the present specification. A space between the aforesaid second wall 27 and the wedge 30 of the slide member 24 corresponds to the second separated groove 40 described in the present specification. The first separated groove 39 and the second separated groove 40 allow the projection 29 of the holder 19 to penetrate therein.

Widths along the arrow K of the first separated groove 39 and the second separated groove 40 are expanded or shrunken interlockingly therewith by moving the slide member 24 along the arrow K. When the slide member 24 slides along the arrow K, if the width of the first separated groove 39 is expanded, the width of the second separated groove 40 is shrunken. If the width of the second separated groove 40 is expanded, the width of the first separated groove 39 is shrunken. Total width of the first separated groove 39 and the second separated groov3 40 is equal or substantially equal to a product of multiplying a number by subtracting one from the number of the holders 19 by the width along the arrow K of the projection 29.

According to the above structure, one of projections 29 of all holders 19 positioned between the movable chassis 18 and the movable member 23 penetrates into the guide groove 31 by that the movable member 23 and the slide member 24 rotate (move) as an integrated one (interlockingly) by the motor 20. Projections 29 of the holders 19, which are other than above holder 19 and located nearer to an arrow K1 (shown in Fig. 5) than the above one projection 29 inserting in the guide groove 31, penetrate into the first separated groove 39. Projections 29 of the holders 19, which are other than above holder 19 and located nearer to an arrow K2 (shown in Fig. 5) than the above one projection 29 inserting in the guide groove 31, penetrate into the second separated groove 40. The arrow K1 is one side of the arrow K and the arrow K2 is the other side of the arrow K.

A position, in which the projection 29 of the holder 19 is located between the movable chassis 18 and the second wall 27 by approaching the connecting wall 28 not to penetrate in the guide groove 31, is called as a receiving position. Since the wedge 30 of the slide member 24 is spaced from the connecting wall 28, the first separated groove 39 and the second separated groove 40 become to the integrated one in the receiving position. In the receiving position, plural holders 19 move close to each other.

A position, in which the projection 29 of the holder 19 penetrates into the playback portion 38 of the guide groove 31 and deep areas of the first and second separated grooves 39, 40, is called as a playback position. In the playback position, the holder 19, the projection 29 of which penetrates in the guide groove 31, is moved apart from the receiving position more than the other holders 19 by the wedge 30 of the slide member 24. In the playback position, the holders 19, which holds the CD 2 to be played back, moves apart from the other holders 19, and the pick-up 78 can penetrate between the holder 19, which holds the CD 2 to be played back, and the other holder 19.

A position, in which the projection 29 is located between the second wall 27 of the second slide member 26 and the movable chassis 18 so as to penetrate in the loading portion 33 of the guide groove 31 and the first and second separated grooves 39, 40, is called as a loading position of the holder 19.

In the playback position, the projection 29 of the holder 19 at a side near the arrow K1 of the holder 19, which holds the CD 2 to be played back, penetrates in the first separated groove 39. The first separated groove 39 moves the holder 19 at the side near the arrow K1 apart from the holder 19, which holds the CD 2 to be played back.

In the playback position and the loading position, the projection 29 of the holder 19 at a side near the arrow K2 of the holder 19, which holds the CD 2 to be played back, penetrates in the second separated groove 40. The second separated groove 40 moves the holder 19 at the side near the arrow K2 apart from the holder 19, which holds the CD 2 to be played back.

The interlocking movable mechanism 22 includes the motor 41 (shown in Fig. 3) as the second drive source, a drive chassis 42 (shown in Fig. 3) as a drive member, a first projection 43, a first hole 44, a second projection 45 and a second hole 46. In Fig. 3, two drive chassis 42 and two later-described second drive chassis 53 are shown. Actually, one drive chassis 42 and one second drive chassis 53 are provided.

When the holder 19 of the disk receiving unit 6 is moved between the receiving position and the playback position, the interlocking movable mechanism 22 moves the second slide member 26 along the arrow K against the member body 25 to be most apart form the second wall 27 of the member body 25. Then, the interlocking movable mechanism 22 positions the slide member 24 in a position, in which the projection 29 of the holder 19 holding the CD 2 to be positioned in the playback position can penetrate in the guide groove 31.

When the holder 19 of the disk receiving unit 6 is moved between the playback position and the loading position, that is the CD 2 is inserted in or ejected from the main body 3, the interlocking movable mechanism 22 moves the slide member 24 along the arrow K against the movable member 23 to be most close to the second wall 27 of the member body 25. Then, the interlocking movable mechanism 22 positions the second slide member 26 in a position, in which the projection 29 of the holder 19 holding the CD 2 to be positioned in the loading position, that is to be inserted or ejected, can penetrate in the guide groove 31. The interlocking movable mechanism 22 moves interlockingly the slide member 24, that is the movable chassis 16 of the disk playback unit 5, and the second slide member 26, that is the movable chassis 18 of the disk receiving unit 6, along the arrow K.

The motor 41 is mounted on the bottom plate 11 of the fixed chassis 9. The drive chassis 42 is formed into a plate shape with the sheet metal. The drive chassis 42 is formed into a rectangular shape in plan view. The drive chassis 42 is supported movably along the direction perpendicular (intersecting) to the arrow K by the surrounding wall 12 of the fixed chassis 9 in the main body 3. The second drive chassis 53 (shown in Figs. 2, 3), which includes a rack 47 engaging with a gear 48 to be rotated by the driving force of the motor 41 as the second drive source, slides along the direction perpendicular to the arrow K, thereby, the drive chassis 42 slides along the direction perpendicular to the arrow K. In other words, the drive chassis 42 is moved along the direction intersecting (perpendicular) to the arrow K against the surrounding wall 12 of the fixed chassis 9 by the driving force of the motor 41 as the second drive source.

The first projection 43 projects from the movable chassis 18 of the disk receiving unit 6 toward the drive chassis 42. The first hole 44 is provided at the drive chassis 42. The first hole 44 pieces through the drive chassis 42. The first projection 43 penetrates in the first hole 44.

The first hole 44 includes a first parallel portion 49 and a first slant portion 50 as shown in Figs. 25-32. The first parallel portion 49 extends linearly along the direction perpendicular to the arrow K. The first slant portion 50 is continued to an end of the first parallel portion 49, and extends linearly along a direction intersecting both the arrow K and the direction perpendicular to the arrow K. The first slant portion 50 slants so as to be gradually close to the second wall 27 of member body 25 in accordance with separating from the first parallel portion 49.

The second projection 45 projects from the movable chassis 16 of the disk playback unit 5 toward the drive chassis 42. The second hole 46 is provided at the drive chassis 42. The second hole 46 pieces through the drive chassis 42. The second projection 45 penetrates in the second hole 46.

The second hole 46 includes a second slant portion 51 and a second parallel portion 52. The second slant portion 51 extends linearly along a direction intersecting both the arrow K and the direction perpendicular to the arrow K. The second slant portion 51 slants so as to be gradually apart from the second wall 27 of member body 25 in accordance with separating from the second parallel portion 52. The second slant portion 51 is in parallel to the first slant portion 50. The second parallel portion 52 is continued to an end of the second slant portion 51, and extends linearly in the direction perpendicular to the arrow K.

When the first projection 43 is positioned in the first slant portion 50, the second projection 45 is positioned in the second parallel portion 52. When the first projection 43 is positioned in the first parallel portion 49, the second projection 45 is positioned in the second slant portion 51.

When the holder 19 is positioned in the loading position, that is the CD 2 is inserted in or ejected from the main body 3, by the driving force of the motor 41 as the second drive source, the aforesaid interlocking movable mechanism 22 positions the drive chassis 42 in a position, in which the second projection 45 moves in the second parallel portion 52, and the first projection 43 moves in the first slant portion 50. When the holder 19 is moved between the playback position and the receiving position by the driving force of the motor 41 as the second drive source, the aforesaid interlocking movable mechanism 22 positions the drive chassis 42 in a position, in which the second projection 45 moves in the second slant portion 51, and the first projection 43 moves in the first parallel portion 49.

When the second projection 45 is positioned in the second parallel portion 52 by the interlocking movable mechanism 22, the slide member 24 most approaches the second wall 27 of the member body 25. The holder 19, the projection 29 of which is positioned in the loading portion 33 of the guide groove 31 of the slide member 24 closest to the second wall 27 of the member body 25, is positioned in a position, in which the CD 2 inserted/ejected through the insertion opening 10 can be held.

When information of any one CD 2 selected by the operation panel from among the plural CDs 2 received in the main body 3 is read out, the CD changer 1 as structured above makes the projections 29 of all holders 19 touch the connecting wall 28 by the driving force of the motor 20 as the drive source, as shown in Fig. 10.

Furthermore, the first and second slide chassis 61, 62 are positioned so as to move the vertical portion 65 closest to motor 20 by the driving force of the motor 20. Then, the other end 17b of the swing chassis 17, that is the clamp unit 67 and the pick-up unit 69 of the disk playback unit 5, is escaped from a space between the plural CDs 2, as shown in Fig. 33. Furthermore, the first and second lock members 82, 83 are positioned in the lock position as shown in Fig. 36. In other word, the movable frame 66 is locked by the lock hooks 85, 88, and the movable frame 66, that is the clamp unit 67 and the pick-up unit 69, is fixed against the swing chassis 17, that is the main body 3, as shown in Figs. 44E and 46G.

The pick-up unit 69 is positioned in the playback position as shown in Fig. 40A, and the first and second insert portions 81, 92 are escaped from a space between the turntable 72 and the holder 19. The projections 29 of all holders 19 are touched with the connecting wall 28 by the driving force of the motor 20.

As shown in Fig. 25, the drive chassis 42 is positioned in a position, in which the first projection 43 is positioned in the first parallel portion 49 of the first hole 44, by the driving force of the motor 41 as the second drive source. Furthermore, as shown in Fig. 10, the movable chassis 18 mounted on the second slide member 26 is located farthest from the second wall 27 of the member body 25.

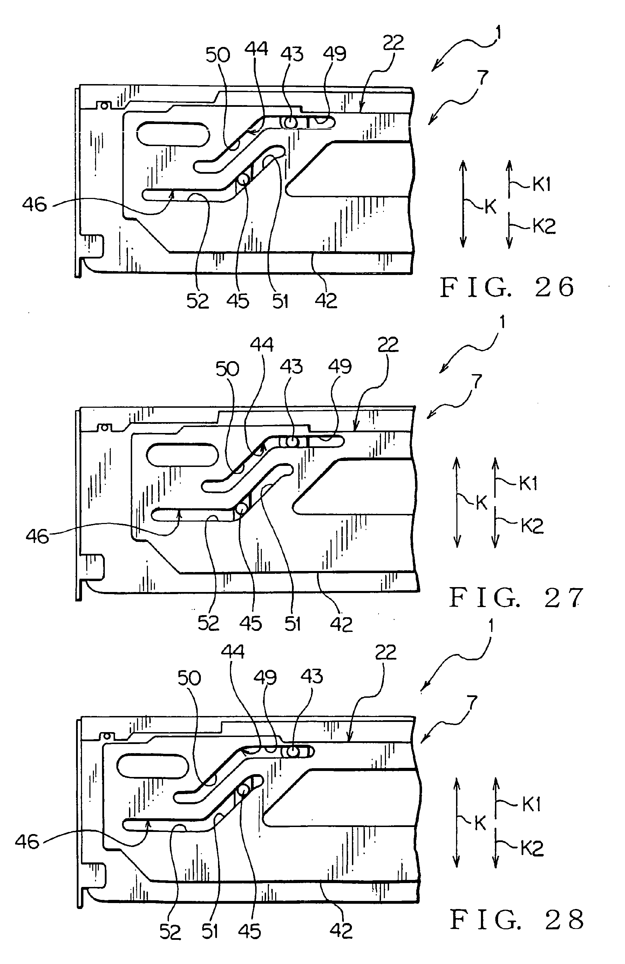

The second projection 45 is moved in the second slant portion 51 of the second hole 46 as shown in Fig. 26, and the drive chassis 42 is positioned in a position, in which the projection 29 of the holder 19 holding any one CD 2 selected to be read out corresponds the guide groove 31 along the direction perpendicular to the arrow K, by the driving force of the motor 41 as the second drive source. As shown in Figs. 6, 11, the guide grove 31 of the slide member 24 is corresponded, along the direction perpendicular to the arrow K, to the projection 29 of the holder 19 holding any one CD 2 selected to be read out. In Figs. 6, 11, the projection 29 of the holder 19 fourth from a topside in Figs. 6, 11 is corresponded to the guide groove 31 provided in the slide member 24.

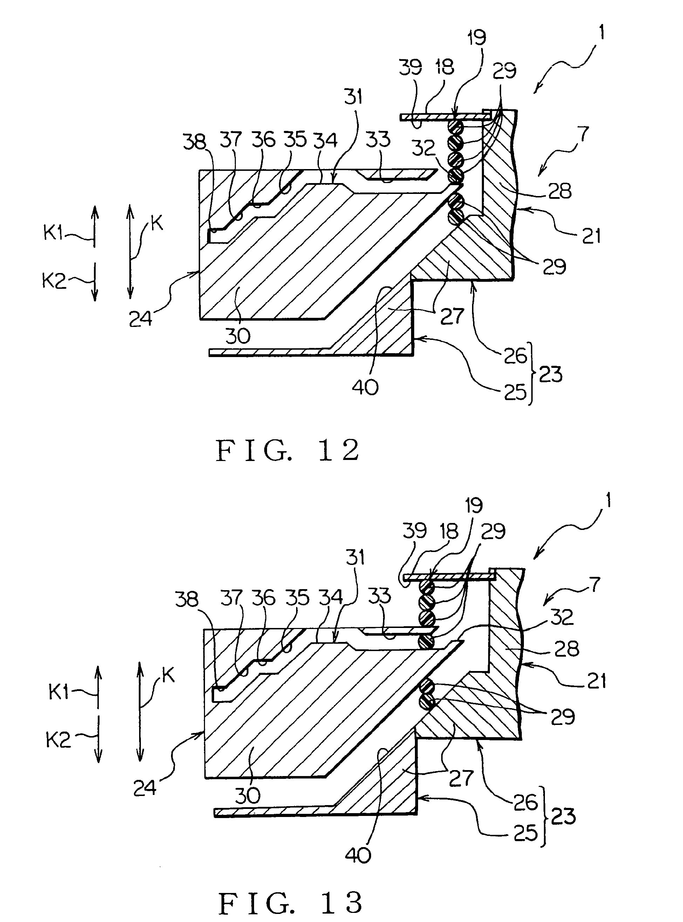

The movable member 23, that is the member body 25 and the second slide member 26, and the slide member 24 are rotated as an integrated one, and the first and second slide chassis 61, 62 are moved in a direction of that the vertical portion 65 moves gradually apart from the motor 20. Then, the projections 29 of all holders 19 move gradually apart from the connecting wall 28. Thereby, as shown in Fig. 12, the projection 29 of the holder 19 holding any one CD 2 selected to be read out penetrates in the opening 32 of the guide groove 31. Furthermore, the projection 29 of the holder 19 holding the other CD 2 touch the wedge 30 of the slide member 24 and moves in the first and second separated grooves 39, 40 by the wedge 30.

When the movable member 23, that is the member body 25 and the second slide member 26, and the slide member 24 are rotated as an integrated one by the driving force of the motor 20, the projection of the holder 19 holding any one CD 2 selected to be read out is positioned in the loading portion 33 as shown in Fig. 13.

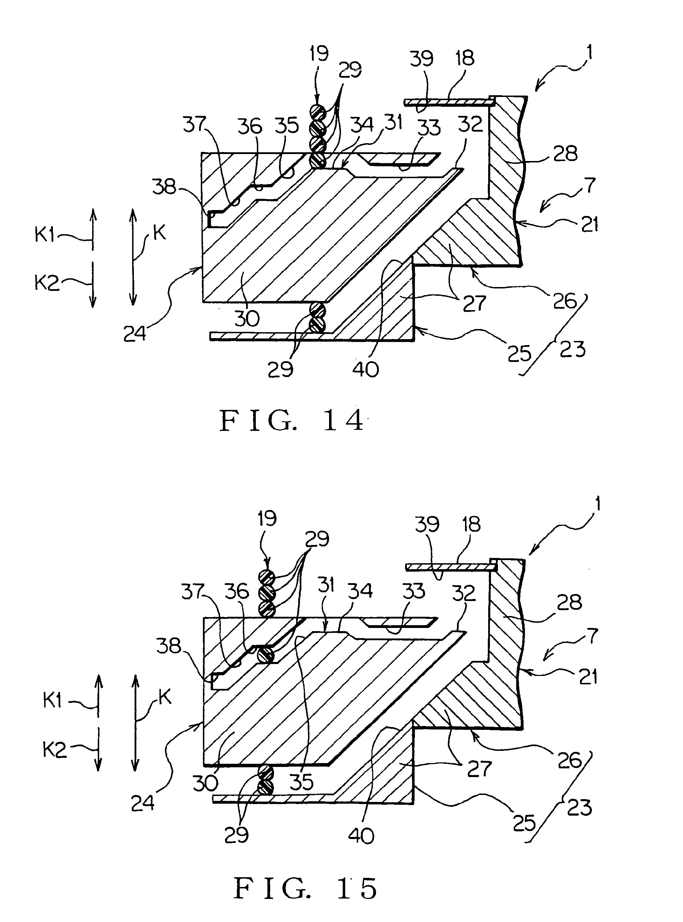

Thereafter, the projection of the holder 19 holding the one CD 2 selected to be read out is positioned in the pick-up insert portion 34 of the guide groove 31 as shown in Fig. 14. In this condition, the first and second slide chassis 61, 62 moves in the direction of that the vertical portion 65 moves gradually apart from the motor 20, so that the swing chassis 17 rotates around the one end portion 17a and the other end portion 17b, that is the clamp unit 67, penetrates in a space between the one CD 2 and the other CD 2.

Then, the projection 29 of the holder 19 holding the one CD 2 moves in the first connecting portion 35, and is positioned in the clamp portion 36 as shown in Fig. 15. In the condition, the pick-up unit 69 is moved close to the turntable 72 until the unlock position by the driving force of the motor of the pick-up moving portion 68 as shown in Fig. 37. Thereby, as shown in Fig. 41B, the first insert portion 81 penetrates between the turntable 72 and the movable portion 74, and the second insert portion 92 provided at the other end portion 91b of the rotating member 91 penetrates between the turntable 72 and the movable member 74 by an end portion of the pick-up case 79 pushing the one end portion 91a. Then, the clamp unit 67 is positioned in the unclamp location, and the CD 2 is piled on the surface 72a of the turntable 72.

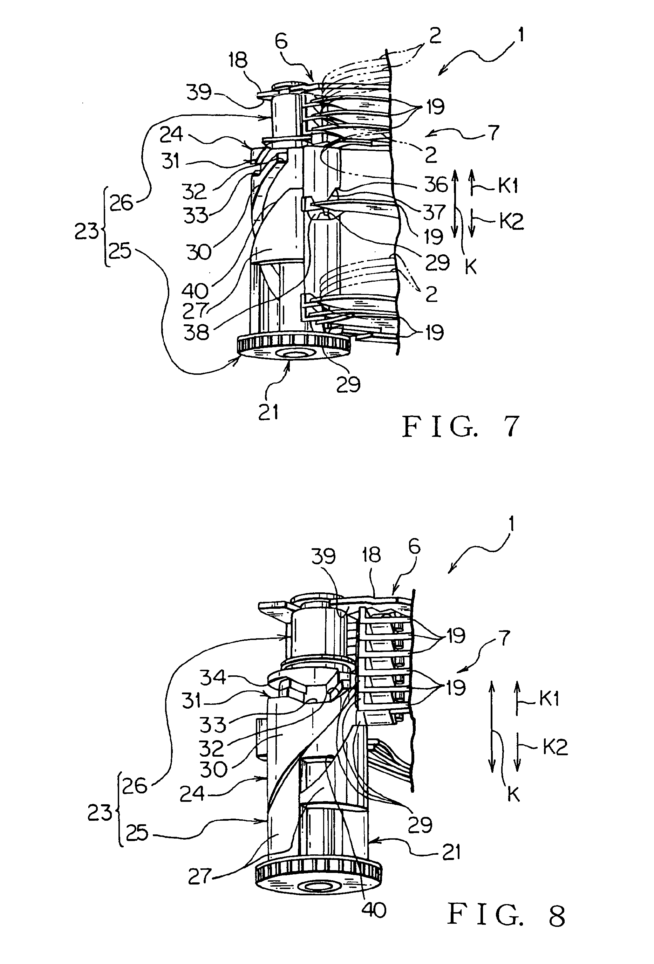

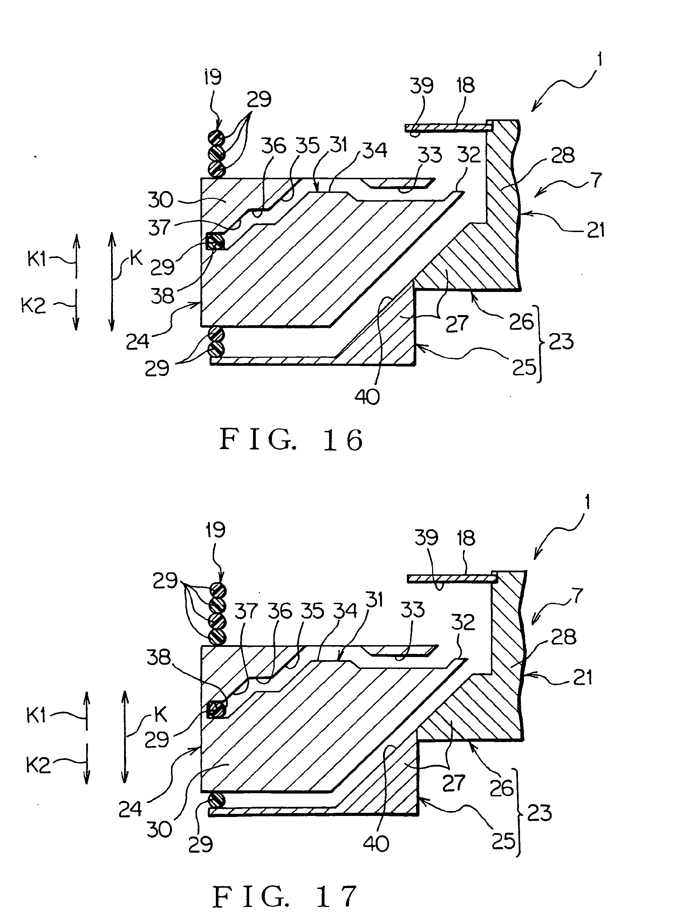

Thereafter, the pick-up unit 69 is moved apart from the turntable 72 and positioned in the playback position by the driving force of the motor of the pick-up moving portion 68, as shown in Fig. 38. Thereby, the first and second insert portions 81, 92 move out from a space between the turntable 72 and the movable member 74, and the one end portion of the clamp hook 75 projects over the surface 72a of the turntable 72. Then, the clamp unit 67 is positioned in the clamp location. The clamp hook 75 locks the CD 2 on the surface 72a of the turntable 72 and the clamp unit 67 clamps the CD 2. The projection 29 of the holder 19 holding the one CD 2 moves in the second connecting portion 37 and positioned in the playback portion 38, as shown in Figs. 7, 16.

Furthermore, the projections 29 of the holder 19 holding the CD 2 located at a side near the arrow K1 of the one CD 2 is moved to a deep side of the first separated groove 39, that is a side apart from the connecting wall 28 by the wedge 30 of the slide member 24. Furthermore, the projections 29 of the holder 19 holding the CD 2 located at a side near the arrow K2 of the one CD 2 is moved to a deep side of the second separated groove 40, that is a side apart from the connecting wall 28 by the wedge 30 of the slide member 24.

Then, as shown in Figs. 7, 16, the holder 19 holding the one CD 2 is positioned by the guide groove 31 provided at the wedge 30 of the slide member 24. Thereafter, the holder 19 holding the one CD 2 is separated from the other holders 19 by the wedge 30 of the slide member 24 and the movable chassis 18 and the second wall 27, that is the first and second separated grooves 39, 40. Then, the other holders 19 are positioned by the first and second separated grooves 39, 40.

When the projection 29 of the holder 19 holding the one CD 2 is positioned in the playback portion 38, the holder 19 is moved apart from the CD 2 clamped by the clamp unit 67 of the disk playback unit 5. Thus, it is prevented that the holder 19 interferes with rotation of the CD 2. The vertical portion 65 is moved apart from the motor 20 by the driving force of the motor 20, and the first and second lock members 82, 83 move from the lock position to the unlock position, as shown in Fig. 35. Locking by the lock hooks 85, 88 is unlocked as shown in Figs. 45F, 47H, thereby the movable frame 66, that is the clamp unit 67 and the pick-up unit 69, is made movable against the swing chassis 17, that is the main body 3. Then, the lock hook 85 does not abut on the other end portion 91b of the rotating member 91 as shown in Fig. 39, and the clamp unit 67 is held in the clamp location as shown in Fig. 43D.

The spindle motor 73 rotates the turntable 72 together with the CD 2, and the optical pick-up 78 of the pick-up unit 69 reads out information from a required area of the CD 2. When reading out information from the one CD 2 is stopped, the removable member 23, that is the member body 25 and the second slide member 26, and the slide member 24 are rotated oppositely against the above direction by the driving force of the motor 20 as the drive source.

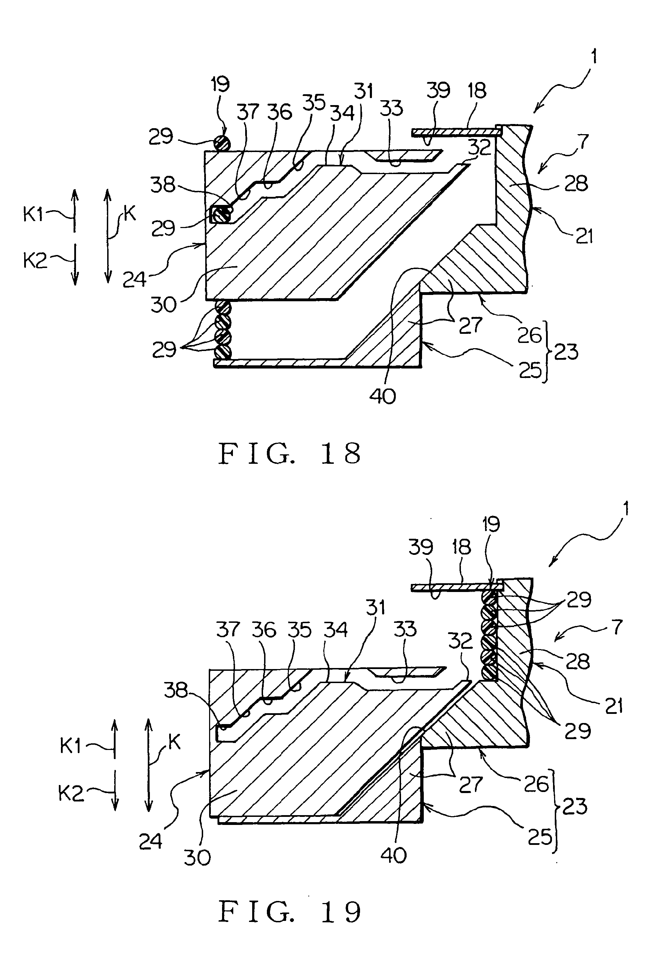

Thus, by moving the slide member 24 along the arrow K, and expanding or shrinking the width of the first separated groove 39 and the width of the second separated groove 40 interlockingly, the holder 19 holding the one CD 2 is positioned and separated from the other holders 19. When the holder 19 holding the CD 2 second from the bottom in Fig. 17 is positioned in the playback position as shown in Fig. 17, or When the holder 19 holding the CD 2 second from the top in Fig. 18 is positioned in the playback position as shown in Fig. 18, the action processes is the same. In conditions shown in Figs. 17, 18, the first projection 43 is positioned in the first parallel portion 49, and the second projection 45 is positioned in the second slant portion 51 as shown in Figs. 27, 28.

When the CD 2 is in playback, that is the CD 2 is being rotated by the spindle motor 73, the lock device 70 is held in the unlock position, and the lock hook 85 of the first lock member 82 is spaced against the other end portion 91b of the rotating member 91. Thereby, the rotating member 91 is maintained in a condition that the one end portion 91a can penetrate in the cutout 90 by a biasing force like a spring force. When the pick-up unit 69 could not expose reading light on the required area of the CD 2, and exposes the reading light again on the required area of the CD 2 after the pick-up unit 69 moved closest to the turntable 72, the pick-up unit 69 moves close to the turntable 72 and abuts on the one end portion 91a of the rotating member 91, so that the pick-up unit 69 cannot moves to the turntable 72 until the unclamp position. Therefore, during the CD 2 is played back, that is rotated, clamping of the clamp unit 67 is not unlocked.

When the any one CD 2 selected from among the plural CDs 2 received in the main body 3 is ejected out of the main body 3 or the CD 2 is inserted into the main body 3 and held in the selected any one holder 19 by a command through the operation panel, the CD changer 1 as structured above makes the projections 29 of all holder 19 touch the connecting wall 28 by the motor 20 as the drive source, as shown in Figs. 5, 8 and 19. Furthermore, the CD changer 1 makes the other end portion 17b of the swing chassis 17 of the playback unit 5, that is the clamp unit 67 and the pick-up unit 69, escape from a space between the plural CDs 2.

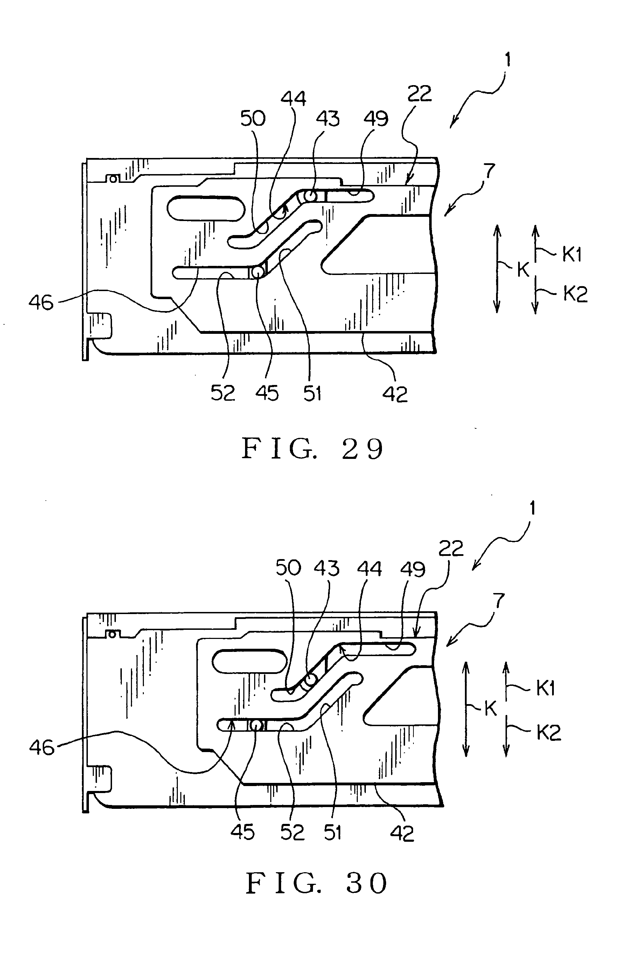

The CD changer 1 also positions the drive chassis 42 in a position, in which the second projection 45 is in the second parallel portion 52, by the motor 41 as the second drive source as shown in Fig. 29. Furthermore, the CD changer 1 positions the slide member 24 closest to the second wall 27 of the member body 25 as shown in Figs. 5, 8 and 19.

The CD changer 1 positions the drive chassis 42 in a position, in which the projection 29 of the one holder 19, which ejects the CD 2 in the main body 3 by moving the first projection 43 in the first slant portion 50 of the first hole 44, corresponds to the guide groove 31 along the direction perpendicular to the arrow K, as shown in Fig.30 by the driving force of the motor 41 as the second drive source.

Then, the CD changer 1 makes the guide groove 31 of the slide member 24 correspond to the projection 29 of the one holder 19 along the direction perpendicular to the arrow K as shown in Figs. 5, 8 and 20. The projection 29 of the holder fourth from the top in Figs. 5, 8 and 20 corresponds to the guide groove 31 of the slide member 24.

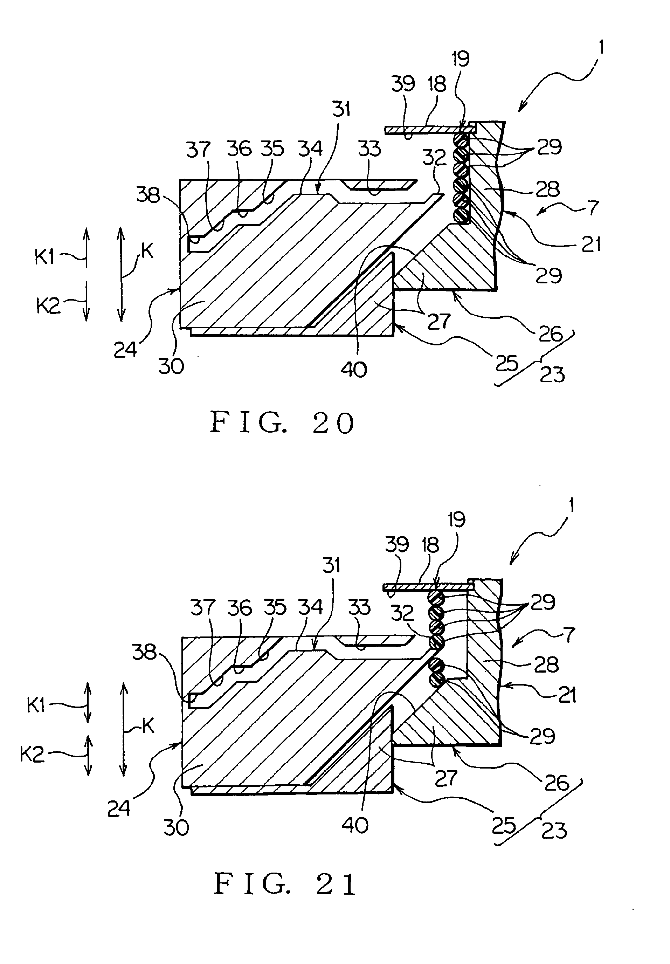

The CD changer 1 rotates the movable member 23, that is the member body 25, the second slide member 26 and the slide member 24, as the integrated one by the driving force of the motor 20 as the drive source. Thereafter, the projections 29 of all holders 19 move gradually apart from the connecting wall 28. Thereby, the projection 29 of the one holder 19 penetrates into the opening 32 of the guide groove 31 as shown in Fig. 21. Furthermore, the projections 29 of the other holders 19 abut on the wedge 30 of the slide member 24 and move in the first and second separated grooves 39, 40 by the wedge 30.

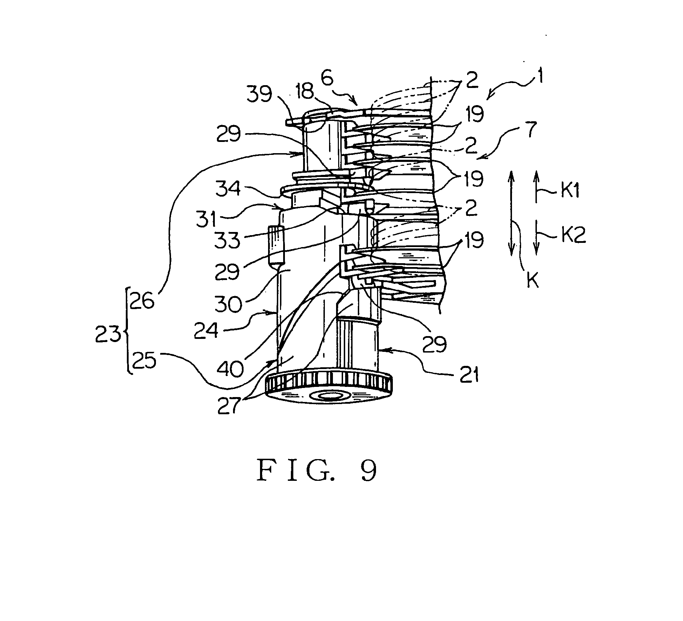

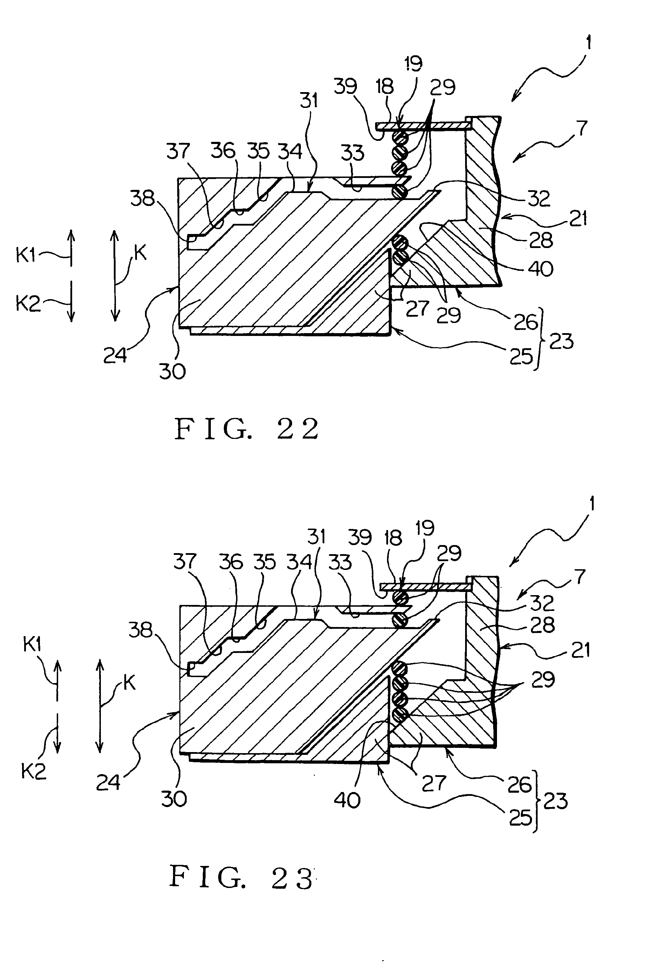

When the movable member 23, that is the member body 25, the second slide member 26 and the slide member 24, is rotated as the integrated one by the driving force of the motor 20 as the drive source, the projection 29 of the one holder 19 is positioned in the loading portion 33 of the guide groove 31 as shown in Figs. 9, 22. Furthermore, the projections 29 of the other holders 19 move toward deep sides of the first and second separated grooves 39, 40, that is a side apart from the connecting wall 28, by the wedge 30.

Then, the one holder 19 is positioned in the loading position by the guide groove 31 provided in the wedge 30 of the slide member 24, as shown in Figs. 9, 22. Furthermore, the one holder 19 is moved apart from the other holders 19 by the wedge 30 of the slide member 24 and the movable chassis 18 and the second wall 27, that is the first and second separated grooves 39, 40.

The roller 14 is rotated in accordance with directions of inserting and ejecting the CD 2 by the driving force of the motor 41 as the second drive source. By rotating the roller 14, the CD 2 is inserted in or ejected from the main body 3 through the insertion opening 10. To stop inserting and ejecting the CD 2, the roller 14 is stopped to rotate and the movable member 23, that is the member body 25, the second slide member 26 and the slide member 24, is rotated in an opposite direction by the driving force of the motor 20 as the drive source.

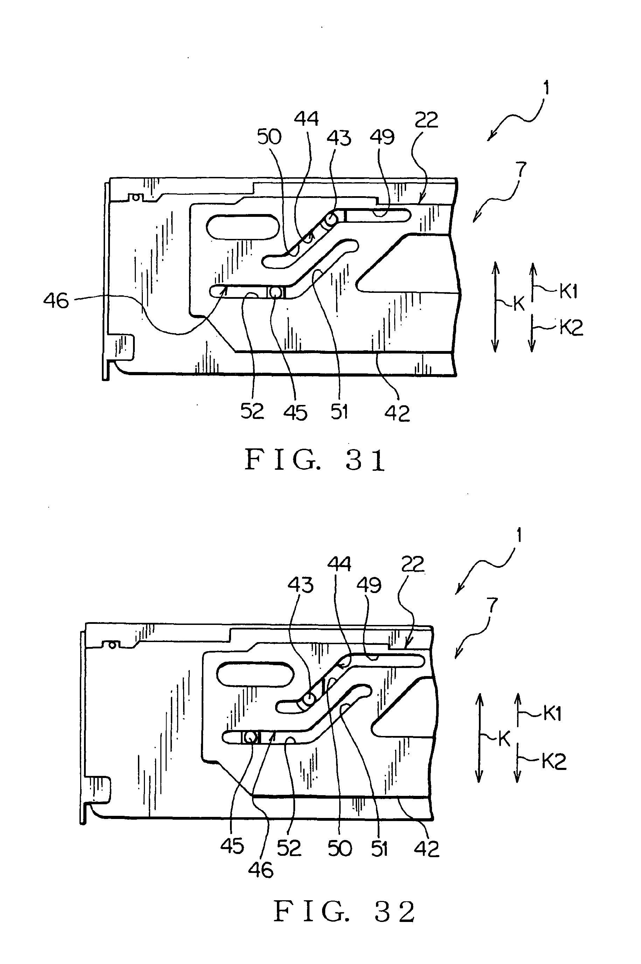

The slide member 24 is moved along the arrow K, and the width of the first separated groove 39 and the width of the second separated groove 40 are expanded or shrunken interlockingly therewith, thereby, the required holder 19 is positioned in the loading position and apart from the other holders 19. The holder 19 second from the top in Fig. 23 is positioned in the loading position, the holder 19 second from the bottom in Fig. 24 is positioned in the loading position by the same way. In conditions shown in Figs. 23, 24, the second projection 45 is positioned in the second parallel portion 52, and the first projection 43 is positioned in the first slant portion 50 as shown in Figs. 31, 32.

In this embodiment, the clamp lock/unlock unit 71 in the unlock position limits the clamp unit 67 to move close to the turntable until the unclamp position. Thereby, the clamp lock/unlock unit 71 limits the clamp unit to unlock the clamping in the unlock position, in which the lock device 70 allows the clamp unit 67 to move. Therefore, in the unlock position, in which the clamp unit 67 is allowed to move and the CD 2 is in rotation and playback, unlock of clamping of the clamp unit 67 is limited, so that the CD 2 is prevented from removing from the clamp unit 67. Thus, the CD 2 in playback is prevented from removing from the clamp unit 67.

In the lock position, the clamp lock/unlock unit 71 allows the clamp unit 67 to move close to the turntable 72 until the unclamp position. Thereby, the clamp lock/unlock unit 71 allows the clamp unit 67 to unlock in the lock position, in which the lock device 70 locks the clamp unit 67. Therefore, in the lock position, the CD 2 can be removed securely from the clamp unit 67 and mounted securely on the clamp unit 67.

In the unlock position, the one end portion 91a of the rotating member 91 penetrates into the cutout 90 of the clamp lock/unlock unit 71. The cutout 90 is formed between an end of the pick-up unit 69 close to the turntable 72 and inner edge of the pick-up unit 69. Thereby, in the unlock position, even if the pick-up unit 69 approaches the turntable 72 and pushes the one end portion 91a of the rotating member 91, the rotating member 91 cannot rotate in a direction, in which the one end portion 91a moves out from the cutout 90.

Therefore, in the unlock position, the rotating member 91 can prevent that the pick-up unit 69 moves close to the turntable 72 until the unclamp position. Then, in the unlock position, the clamp lock/unlock unit 71 can limit securely to unlock the clamping of the clamp unit 67. Thereby, it can be securely prevented that the CD 2 in playback is removed from the clamp unit 67.

In the lock position, the rotating member 91 is pushed by the first lock member 82 of the lock device 70, so that the rotating member 91 rotates in a direction of that the one end portion 91a moves out from the cutout 90 of the clamp lock/unlock unit 71. Thereby, when the pick-up unit 69 moves close to the turntable 72 and the one end portion 91a is pushed in the lock position, the rotating member 91 rotates and allows the pick-up unit 69 to move close to the turntable 72.

Therefore, the clamp lock/unlock unit 71 can unlock securely clamping of the clamp unit 67 in the lock position. Then, in the lock position, the CD 2 can be securely removed from the clamp unit 67 and securely mounted on the clamp unit 67.

The first insert portion 81 is provided at the pick-up unit 69, and the second insert portion 92 is provided at the other end portion 91b of the rotating member 91. Thus, the first and second insert portions 81, 92, which move the movable member 74 apart from the turntable 72 to unlock clamping of the clamp unit 67, are provided plurally.

Thereby, in the lock position, by moving the movable member 74 securely apart from the turntable 72, clamping of the clamp unit 67 can be securely unlocked. Therefore, in the lock position, the CD 2 can be more securely removed from the clamp unit 67 and more securely mounted on the clamp unit 67.

The projection 29 of the one holder 19 holding the selected any CD 2 is inserted into the guide groove 31. The projections 29 of the other holders 19 at the side of the arrow K1 about the selected holder 19 are inserted into the first separated groove 39. The projections 29 of the other holders 19 at the side of the arrow K2 about the selected one holder 19 are inserted into the second separated groove 40. Thus, inserting the projections 29 in the guide groove 31, the first separated groove 39 and the second separated grooves 40, the selected CD 2 is moved apart from the other CDs 2 and the information of the selected CD 2 is read out.

The widths of the first and second separated grooves 39, 40 are expanded and shrunken interlockingly to each other by the separated-groove expand/shrink mechanism 21. The sum of the widths of the first and second separated grooves 39, 40 is substantially equal to the product of the number by subtracting one from the number of the holders 19 and the width of the projection 29. Thereby, the one holder 19 holding the selected CD 2 and the other holders 19 can be positioned without rattling.

Thus, by expanding and shrinking the widths of the first and second separated grooves 39, 40 interlockingly with the separated-groove expand/shrink mechanism 21 without a coil spring, the one holder holding the selected any CD 2 can be separated from the other holders 19. Therefore, even if vibration of driving acts on the CD changer 1 installed in the car, the holder 19 can be prevented from vibration. Thereby, the one holder 19 holding the selected any CD 2 can be securely positioned in the playback position. Even if vibration of driving acts on the CD changer 1 installed in the car, the information of the selected any CD 2 can be played back securely.

The separated-groove expand/shrink mechanism 21 includes the movable member 23 and the slide member 24 mounted slidably along the arrow K on the movable member 23. A space between the movable chassis 18 mounted on the movable member 23 and the wedge 30 of slide member 24 forms the first separated groove 39. A space between the second wall 27 of the movable member 23 and the wedge 30 of slide member 24 forms the second separated groove 40, and the guide groove 31 is formed at the wedge 30 of the slide member 24.

By sliding the slide member 24 along the arrow K, the widths of the first and second separated grooves 39, 40 can be securely expanded and shrunken (increased and decreased) interlockingly. The slide member 24 slides in accordance with a position of the one holder 19 holding the selected any CD 2, the information of which is played back. Thereby, the one holder 19 holding the selected any CD 2 can be securely positioned in the playback position.

Since the slide member 24 and the optical pick-up 78 move as an integrated one (interlockingly), a relative position between the slide member 24 and the optical pick-up 78 can be preserved constant. Thereby, the information of the CD 2 held by the holder, which is positioned in the playback position by the guide groove 31 of the slide member 24, can be securely played back by the optical pick-up 78.

When the information is read out from the CD 2, the second slide member 26 of the movable member 23 is moved toward the side of the arrow K1, and the slide member 24 is slid in accordance with a position of the one holder 19 holding the selected any CD 2. Therefore, for reading out the information from the CD 2, the any CD 2 can be positioned in the playback position. Thus, the information can be read out from the any CD 2 and played back.

When the CD 2 is inserted and ejected, the slide member 24 is moved to the side of the arrow K2, and the second slide member 26 is slid in accordance with a position of the holder 19 corresponding to the position of the slide member 24 and the CD 2 to be inserted and ejected. Therefore, a relative position between the main body 3 and the holder 19 holding the CD 2 to be inserted in and ejected from the main body 3 can be preserved constant. Thereby, the CD 2 can be securely inserted and ejected through the insert opening 10, and the CD 2 inserted in the main body 3 can be securely held in the holder 19.

Moving the holder 19 between the receiving position and the playback position and positioning the holder 19 in the loading position can be acted serially by the interlocking movable mechanism 22. Thereby, number of parts can be decreased and the cost can be reduced. Additionally, an action of moving the holder 19 between the receiving position and the playback position and an action of inserting and ejecting CD 2 can be switched smoothly.

The interlocking movable mechanism 22 includes the drive chassis 42 provided with the first hole 44 and the second hole 46, the first projection 43 arranged at the movable chassis 18 of the disk receiving unit 6 and the second projection 45 arranged at the movable chassis 16 of the disk playback unit 5. The first hole 44 has the first slant portion 50 and the first parallel portion 49. The second portion has the second slant portion 51 and the second parallel portion 52.

When the CD 2 is inserted and ejected, the second projection 45 moves in the second parallel portion 52, and the first projection 43 moves in the first slant portion 50. Thereby, when the CD 2 is inserted and ejected, the movable chassis 18, that is the slide member 24, of the disk playback unit 5 is positioned without sliding. Furthermore, when the CD 2 is inserted and ejected, the movable chassis 18 of the disk receiving unit 6 and the second slide member 26, that is the holder 19, moves along the arrow K.

Therefore, the relative position between the main body 3 and the holder 19 holding the CD 2 to be inserted in and ejected from the main body 3 can be preserved constant. The CD 2 can be securely inserted and ejected through the insert opening 10, and the CD inserted in the main body 3 can be securely held in the holder 19.

When the holder 19 moves between the receiving position and the playback position, the first projection 43 moves in the first parallel portion 49, and the second projection 45 moves in the second slant portion 51. Thereby, when the holder 19 moves between the receiving position and the playback position, the movable chassis 18 and the second slide member 26 of the disk receiving unit 6, that is the holder 19, can be positioned without sliding. Furthermore, when the holder 19 moves between the receiving position and the playback position, the movable chassis 16 of the disk playback unit 5, that is the slide member 24, moves along the arrow K.

Then, when the information of the CD 2 is read out, any CD 2 can be securely positioned in the playback position. Thus, the information can be read out from the CD and played back.

The movable member 23 is formed into a cylindrical shape and the slide member 24 is formed into a tubular shape. The movable chassis 18 and the second wall 27 are mounted at each end of the movable member 23. The movable member 23 and slide member 24 are arranged coaxially and rotated as the integrated one by the driving force of the motor 20 as the drive source. By rotating the movable member 23, the holder 19 can be moved between the receiving position and the playback position. Moving path of the movable member 23 can be minimized, so that the main body 3, that is the CD changer 1, can be miniaturized.

In this embodiment, the CD changer 1 receiving plural CDs 2 as recording media is shown. The present invention can be applied to an MD changer, which receives plural MDs (Mini Discs) as disc-shape recording media, and any recording medium playback apparatus receiving any plural disc-shape recording media such as DVDs (Digital Versatile Disc). The present invention also can be applied to a recording medium playback apparatus, which receives one recording medium such as the aforesaid MD or DVD, and reads out information recorded on the one recording medium.

In the above embodiment, the movable member 23 is formed into a cylindrical shape, and the slide member 24 is formed into a tubular shape so as to be moved by rotating around the axis thereof. According to the present invention, the movable member 23 and the slide member 24 can be formed to a plate shape other than the cylindrical shape and the tubular shape so as to be moved in a direction other than rotation around the axis, such as sliding.

In the above embodiment, the slide member 24 and the optical pick-up 78 are moved as an integrated one. In the present invention, the slide member 24 and the optical pick-up 78 are not required to move as the integrated one. In the present invention, it is sufficient that the relative position between the slide member 24 and the optical pick-up 78 are maintained constant by moving interlockingly.

In the embodiment, the slide member 24 and the second slide member 26 can be moved by the interlocking movable mechanism 22 with the one drive source. According to the present invention, the slide member 24 and the second slide member 26 can be moved by independent drive sources to each other.

According to the above embodiment, the following CD changer can be given.
Appendix 1: A CD changer 1 includes a main body 3;
   a clamp unit 67 clamping a CD 2 to be received in the main body 3 and rotating the CD;
   a lock device 70 movable between a lock position, in which the clamp unit 67 is locked to the main body 3, and a unlock position, in which the clamp unit 67 is made movable against the main body 3; and
   a clamp lock/unlock unit 71 limiting to unlock clamping by the clamp unit 67 when the lock device 70 is positioned in the unlock position, and allowing to unlock clamping by the clamp unit 67 when the lock device 70 is positioned in the lock position.
Appendix 2: The CD changer 1 according to Appendix 1 is characterized in that the clamp unit 67 includes:
   a turntable 72 positioning the CD 2 on a surface 72a thereof, and clamping the CD 2 positioned on the surface 72a, and rotating together with the CD 2; and
   a pick-up unit 69 provided to move freely between an unclamp position, in which clamping the CD 2 on the turntable 72 is unlocked and a playback position, in which the CD1 2 is clamped on the turntable 72 and information on the CD 2 is played back, and
   the clamp lock/unlock unit 71 limits the pick-up unit 69 to move until the unclamp position when the lock device 70 is positioned in the unlock position, and allows the pick-up unit 69 to move until the unclamp position when the lock device 70 is positioned in the lock position.
Appendix 3: The CD changer 1 according to Appendix 2 is characterized in that the clamp lock/unlock unit 71 includes:
   a cutout 90 formed by cutting out between an end of the pick-up unit 69, close to the turntable 72, and an inner edge of the pick-up unit 69; and
   a rotating member 91 provided rotatably on the main body 3 to move an end portion 91a of the rotating member 91 between a condition, in which the end portion 91a can penetrate into the cutout 90 of the pick-up unit 69 positioned in the playback position, and another condition, in which the end portion 91a moves out of the cutout 90 of the pick-up unit 69 positioned in the playback position, and
   the end portion 91a of the rotating member 91 penetrates into the cutout 90 of the pick-up unit 69 positioned in the playback position when the lock device 70 is positioned in the unlock position, and the other end portion 91b of the rotating member 91 is pushed by the lock device 70 in a direction of that the one end portion 91a moves out of the cutout 90 , and the end portion 91a of the rotating member 91 moves out of the cutout 90 of the pick-up unit 69 positioned in the playback position.
Appendix 4: The CD changer 1 according to Appendix 3 is characterized in that the clamp unit 67 includes:
   a movable member 74 provided movable along a direction perpendicular to a surface 72a of the turntable 72 and biased to move close to the turntable 72;
   clamp hooks 75 provided between the turntable 72 and the movable member 74, ends of the clamp hooks 75 projecting from the surface 72a when the movable member 74 moves close to the turntable 72 and retracting under the surface 72a when the movable member 74 moves apart from the turntable 72, and
   the pick-up unit 69 is provided with a first insert portion 81 to penetrate between the turntable 72 and the movable member 74 when the pick-up unit 69 moves from the playback position to the unclamp position, and
   the other end portion 91b of the rotating member 91 is provided with a second insert portion 92 to penetrate between the turntable 72 and the movable member 74 when the pick-up unit 69 moves from the playback position to the unclamp position, and
   the first insert portion 81 and the second insert portion 92 penetrate between the turntable 72 and the movable member 74 and the one end of the clamp hook 75 retracts under the surface 72a of the turntable 72 when the pick-up unit 69 is in the unclamp position, and the first insert portion 81 and the second insert portion 92 move out of a gap between the turntable 72 and the movable member 74 and the one end of the clamp hook 75 projects from the surface 72a of the turntable 72 when the pick-up unit is in the playback position.

According to the CD changer 1 described in Appendix 1, the clamp lock/unlock unit limits the clamp unit to unlock clamping at the unlock position, in which the lock unit allows the clamp unit to move. Thereby, at the unlock position in which the clamp unit is allowed to move, that is the recording medium is rotated and played back, unlock of clamping of the clamp unit is limited, so that removing the recording medium from the clamp unit is prevented. Therefore, during playing back the recording medium, unlock of clamping the recording medium is prevented.

The clamp lock/unlock unit also allows the clamp unit to unlock clamping at the lock position, in which the lock unit locks the clamp unit. Thereby, at the lock position, the recording medium can be removed securely from the clamp unit, and mounted securely on the clamp unit.

According to the CD changer 1 described in Appendix 2, the clamp lock/unlock unit limits the clamp unit to move until the unclamp position at the unlock position. Thereby, at the unlock position, the clamp lock/unlock unit can limit securely unlock of clamping of the clamp unit. Therefore, during playing back the recording medium, unlock of clamping the recording medium is prevented.

The clamp lock/unlock unit at the lock position allows the clamp unit to move until the unclamp position. Thereby, at the lock position, the clamp lock/unlock unit can unlock securely clamping of the clamp unit. Therefore, at the lock position, the recording medium can be removed securely from the clamp unit, and mounted securely on the clamp unit.

According to the CD changer 1 described in Appendix 3, at the unlock position, the one end portion of the rotating member penetrates into the cutout of the clamp lock/unlock unit. The cutout is formed between the end of the pick-up unit, close to the turntable, and the inner edge of the pick-up unit. Thereby, in the unlock position, even if the pick-up unit approaches the turntable and pushes the one end portion of the rotating member, the rotating member cannot rotate in a direction, in which the one end portion moves out from the cutout. Therefore, in the unlock position, the rotating member can prevent that the pick-up unit moves close to the turntable until the unclamp position. Then, in the unlock position, the clamp lock/unlock unit can limit securely to unlock clamping of the clamp unit. Thereby, it can be securely prevented that the recording medium in playback is removed from the clamp unit.

In the lock position, the rotating member is pushed by the lock unit, and rotates in a direction of that the one end portion moves out from the cutout of the clamp lock/unlock unit. Thereby, when the pick-up unit moves close to the turntable and the one end portion is pushed in the lock position, the rotating member rotates and allows the pick-up unit to move close to the turntable. Therefore, the clamp lock/unlock unit can unlock securely clamping of the clamp unit in the lock position. Therefore, in the lock position, the recording medium can be securely removed from the clamp unit and securely mounted on the clamp unit.

According to the CD changer 1 described in Appendix 4, the first insert portion is provided at the pick-up unit, and the second insert portion is provided at the other end portion of the rotating member. Thus, the first and second insert portions, which move the movable member apart from the turntable to unlock clamping of the clamp unit, are provided plurally.

Thereby, in the lock position, by moving the movable member securely apart from the turntable, clamping of the clamp unit can be securely unlocked. Therefore, in the lock position, the recording medium can be more securely removed from the clamp unit and more securely mounted on the clamp unit.

The above embodiment is one possible embodiment of the invention, and is not limit by the present invention. Various changes can be made without departing from the scope of the present invention.

## Claims

1. A recording medium playback apparatus comprising:
a main body;
a clamp unit clamping a recording medium to be received in the main body and rotating the recording medium;
a lock unit movable between a lock position, in which the clamp unit is locked to the main body, and a unlock position, in which the clamp unit is made movable against the main body; and
a clamp lock/unlock unit limiting to unlock clamping by the clamp unit when the lock unit is positioned in the unlock position, and allowing to unlock clamping by the clamp unit when the lock unit is positioned in the lock position.

2. The recording medium playback apparatus according to claim 1, wherein the clamp unit comprises:
a turntable positioning the recording medium on a surface thereof, and clamping the recording medium positioned on the surface, and rotating together with the recording medium; and
a pick-up unit provided to move freely between an unclamp position, in which clamping the medium on the turntable is unlocked, and a playback position, in which the recording medium is clamped on the turntable and information on the recording medium is played back,
wherein the clamp lock/unlock unit limits the pick-up unit to move to the unclamp position when the lock unit is positioned in the unlock position, and allows the pick-up unit to move to the unclamp position when the lock unit is positioned in the lock position.

3. The recording medium playback apparatus according to claim 2, wherein the clamp lock/unlock unit comprises:
a cutout formed by cutting out between an end of the pick-up unit, close to the turntable, and an inner edge of the pick-up unit; and
a rotating member provided rotatably on the main body to move an end portion of the rotating member between a condition, in which the end portion can penetrate into the cutout of the pick-up unit positioned in the playback position, and another condition, in which the end portion moves out of the cutout of the pick-up unit positioned in the playback position,
wherein the end portion of the rotating member penetrates into the cutout of the pick-up unit positioned in the playback position when the lock unit is positioned in the unlock position, and the other end portion of the rotating member is pushed by the lock unit in a direction of that the one end portion moves out of the cutout, and the end portion of the rotating member moves out of the cutout of the pick-up unit positioned in the playback position.

4. The recording medium playback apparatus according to claim 3, wherein the clamp unit comprises:
a movable member provided movable along a direction perpendicular to a surface of the turntable and biased to move close to the turntable;
an extract/retract member provided between the turntable and the movable member, an end of the extract/retract member projecting from the surface when the movable member moves close to the turntable and retracting under the surface when the movable member moves apart from the turntable,
wherein the pick-up unit is provided with a first insert portion to penetrate between the turntable and the movable member when the pick-up unit moves from the playback position to the unclamp position,
wherein the other end portion of the rotating member is provided with a second insert portion to penetrate between the turntable and the movable member when the pick-up unit moves from the playback position to the unclamp position,
wherein the first insert portion and the second insert portion penetrate between the turntable and the movable member and the one end of the extract/retract member retracts under the surface of the turntable when the pick-up unit is in the unclamp position, and the first insert portion and the second insert portion move out of a gap between the turntable and the movable member and the one end of the extract/retract member projects from the surface of the turntable when the pick-up unit is in the playback position.
